(19) Europäisches Patentamt
European Patent Office
Office européen des brevets

(11) EP 4 773 200 A1

(12) **EUROPEAN PATENT APPLICATION**
published in accordance with Art. 153(4) EPC

(43) Date of publication:
**08.07.2026 Bulletin 2026/28**

(21) Application number: **25781285.9**

(22) Date of filing: **07.01.2025**

(51) International Patent Classification (IPC):
***H01M 4/13** (2010.01)* ***H01M 4/62** (2006.01)*
***H01M 10/0525** (2010.01)* ***H01M 10/058** (2010.01)*

(52) Cooperative Patent Classification (CPC):
Y02E 60/10

(86) International application number:
**PCT/CN2025/071026**

(87) International publication number:
**WO 2025/208988 (09.10.2025 Gazette 2025/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2024 CN 202410383570**

(71) Applicant: **Ningde Amperex Technology Limited**
**Ningde, Fujian 352100 (CN)**

(72) Inventor: **ZHANG, Yanru**
**Ningde, Fujian 352100 (CN)**

(74) Representative: **Kraus & Lederer PartGmbB**
**Thomas-Wimmer-Ring 15**
**80539 München (DE)**

# (54) SECONDARY BATTERY, ELECTRIC DEVICE AND PREPARATION METHOD FOR SECONDARY BATTERY

(57) A secondary battery includes a negative electrode plate, where the negative electrode plate includes a current collector and a first active material layer, the first active material layer is disposed on at least one surface of the current collector, the first active material layer includes a silicon-based material and a solid-state electrolyte, and the solid-state electrolyte is at least partially bound to a surface of silicon in the silicon-based material. In the secondary battery and an electric device, the solid-state electrolyte is at least partially bound to the surface of silicon in the silicon-based material, mitigating the issue of silicon-based material swelling and enhancing the structural integrity and stability of the negative electrode plate. In addition, as compared to a silicon-based material coated with a binder in the prior art, the use of a solid-state electrolyte can improve the lithium intercalation capability of the silicon-based material and increase the ion conduction rate in the negative electrode plate, thus mitigating the issue of deteriorated kinetic performance of the secondary battery caused by coating a binder on the silicon-based material.

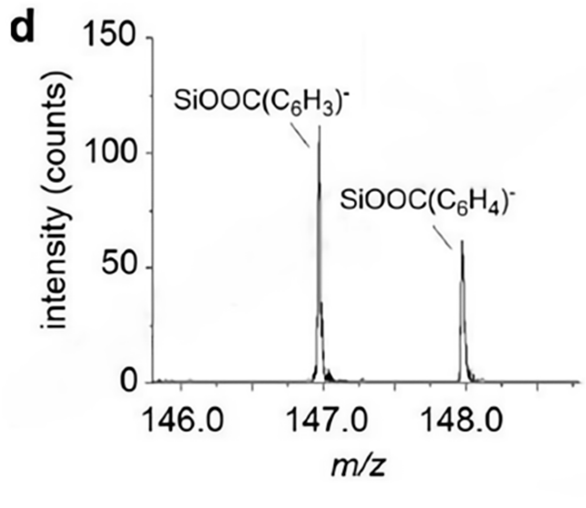


FIG. 3

EP 4 773 200 A1

## Description

## CROSS-REFERENCE TO RELATED APPLICATIONS

This application claims priority to Chinese Patent Application No. 202410383570.7, filed on March 31, 2024, entitled "SECONDARY BATTERY, ELECTRIC DEVICE, AND PREPARATION METHOD OF SECONDARY BATTERY," which is incorporated herein by reference in its entirety.

## TECHNICAL FIELD

The present application relates to the technical field of electrochemical apparatuses, and in particular, to a secondary battery, an electric device, and a preparation method of secondary battery.

## BACKGROUND

The negative electrode plate material in lithium-ion batteries is generally graphite. If silicon element is added to the negative electrode plate material, the theoretical specific capacity and energy density of the negative electrode plate can be significantly improved. Therefore, lithium-ion batteries with silicon-based negative electrode plates are the future development direction.

During the charging and discharging process of lithium-ion batteries, silicon particles undergo lithiation and delithiation, causing the silicon particles to swell and contract and leading to compromised structural integrity and stability of the negative electrode plate.

## SUMMARY

A binder may be coated on the surface of silicon particles to reduce their swelling, thereby mitigating the issue of damage to the negative electrode plate. However, simply coating the binder on the surface of the silicon particles adversely affects the conductivity of the negative electrode plate, deteriorates the kinetic performance of the lithium-ion battery, reduces cycling performance, and may cause lithium plating at the interface.

Some embodiments of the present application aim to provide a secondary battery, an electric device, and a preparation method of secondary battery, so as to address the issue of deteriorated kinetic performance of the secondary battery caused by coating a binder on the surface of silicon particles in the negative electrode plate.

To address the above technical problem, one technical solution adopted by these embodiments of the present application is to provide a secondary battery, where the secondary battery includes a negative electrode plate, the negative electrode plate includes a negative electrode current collector and a first active material layer, the first active material layer is disposed on at least one surface of the negative electrode current collector, the first active material layer includes a silicon-based material and a solid-state electrolyte, and at least a portion of the solid-state electrolyte is bound to the surface of the silicon-based material.

By configuring the first active material layer in the negative electrode plate to include a silicon-based material and a solid-state electrolyte, with at least a portion of the solid-state electrolyte bound to the surface of the silicon-based material, the solid-state electrolyte bound to the silicon-based material can effectively confine silicon, reducing silicon swelling and the resulting displacement of silicon, thereby enhancing the structural integrity and stability of the negative electrode plate and extending the service life of the secondary battery; and, in addition, as compared to the prior art in which a binder is used to coat silicon, the use of a solid-state electrolyte to confine silicon can improve the lithium intercalation capability of the silicon-based material and increase the ion conduction rate in the negative electrode plate, thus mitigating the issue of deteriorated kinetic performance of the secondary battery caused by coating a binder on silicon.

In some embodiments, a mass percentage of the solid-state electrolyte in the first active material layer is 0.1 wt% to 20 wt%. Limiting the percentage of the solid-state electrolyte to not less than 0.1 wt% ensures effective bonding of the solid-state electrolyte with silicon, ensuring the confinement of silicon and the restriction on silicon swelling and displacement by the solid-state electrolyte. Limiting the percentage of the solid-state electrolyte to not more than 20 wt% ensures the percentage of the silicon-based material in the first active material layer, maintains the ED (Energy Density, energy density) of the secondary battery, and reduces lithium plating. In addition, when the percentage of the solid-state electrolyte exceeds 20 wt%, the restriction on silicon swelling and displacement is limited, and the kinetic performance of the secondary battery also deteriorates. Therefore, limiting the percentage of the solid-state electrolyte to not more than 20 wt% can not only ensure the performance of the secondary battery but also take the material cost into account.

In some embodiments, the mass percentage of the solid-state electrolyte in the first active material layer is 5 wt% to 15 wt%. To balance the confining effect of the solid-state electrolyte on silicon with the ED and cycling performance of the

secondary battery, the mass percentage of the solid-state electrolyte in the first active material layer is preferably 5 wt% to 15 wt%.

In some embodiments, the solid-state electrolyte includes at least one of polymethyl methacrylate, polyvinylidene fluoride, and polyacrylonitrile.

In some embodiments, the solid-state electrolyte is coated on the surface of the silicon-based material, thereby enabling the solid-state electrolyte to effectively bind to the surface of the silicon-based material, reducing swelling.

In some embodiments, the solid-state electrolyte includes polymethyl methacrylate and/or polyacrylonitrile, silicon in the silicon-based material is connected to hydroxyl groups, and the solid-state electrolyte is bound to the hydroxyl groups. The carbonyl groups in polymethyl methacrylate may form hydrogen bonds with the hydroxyl groups on the surface of the silicon-based material, and the lone pair electrons on nitrogen atoms in polyacrylonitrile may form hydrogen bonds with the hydroxyl groups on the surface of the silicon-based material, thereby enabling the solid-state electrolyte to at least partially and more effectively bind to the surface of the silicon-based material, confining the silicon-based material and reducing its swelling and displacement.

In some embodiments, the secondary battery further includes a free electrolyte solution, thereby facilitating the transport of lithium ions, ensuring the charge-discharge rate, and further improving the kinetic performance of the secondary battery.

In some embodiments, the first active material layer further includes a first graphite material, and the first graphite material is mixed with the silicon-based material. When the silicon-based material is mixed with the first graphite material, the first graphite material may assist in confining silicon, further reducing silicon swelling and displacement, and further enhancing the structural integrity and stability of the negative electrode plate.

In some embodiments, a mass of the silicon-based material is $m_1$, a mass of the first graphite material is $m_2$, and $m_1/(m_1+m_2)$ is 5% to 30%. Limiting the ratio of the mass of the silicon-based material to the mass of the first graphite material to not less than 5% ensures the ED of the secondary battery, and limiting it to not more than 30% not only reduces lithium plating but also ensures the confining effect of the first graphite material on silicon, maintaining the structural integrity and stability of the negative electrode plate.

In some embodiments, a ratio of the particle size $D_v50$ of the silicon-based material to the particle size $D_v50$ of the first graphite material is 0.1 to 0.5. Limiting the ratio of the particle size $D_v50$ of the silicon-based material to the particle size $D_v50$ of the first graphite material to not less than 0.1 may reduce side reactions, decrease the cycle decay rate of the secondary battery, and ensures the capacity retention rate of the secondary battery. When the ratio of the particle size $D_v50$ of the silicon-based material to the particle size $D_v50$ of the first graphite material is limited to not more than 0.5, the relatively larger-sized first graphite material can be used to confine the relatively smaller-sized silicon, reducing silicon swelling and displacement, and enhancing the structural integrity and stability of the negative electrode plate.

In some embodiments, the ratio of the particle size $D_v50$ of the silicon-based material to the particle size $D_v50$ of the first graphite material is 0.2 to 0.3. By further limiting the particle size relationship between the silicon-based material and the first graphite material, the capacity retention rate of the secondary battery and the confining effect of the first graphite material on silicon can be balanced.

In some embodiments, the particle size $D_v50$ of the silicon-based material is 4 $\mu$m to 10 $\mu$m, and the particle size $D_v50$ of the first graphite material is 16 $\mu$m to 40 $\mu$m.

In some embodiments, the silicon-based material includes one or more selected from the group consisting of elemental silicon, silicon oxide, silicon carbide, and a silicon alloy. Thus, incorporation of the silicon-based material into the negative electrode plate significantly improves the theoretical specific capacity and energy density of the negative electrode plate.

In some embodiments, the secondary battery further includes a second active material layer disposed on a side of the first active material layer facing away from the negative electrode current collector; and the second active material layer includes a second graphite material. By further incorporating the second active material layer in the secondary battery, silicon can be further confined, reducing silicon swelling and displacement, and enhancing the structural integrity and stability of the negative electrode plate.

In some embodiments, the mass ratio of the second active material layer to the first active material layer ranges from 0.2:1 to 2:1. When the mass ratio of the second active material layer to the first active material layer is less than 0.2, the ability of the second active material layer to restrict the swelling of the silicon-based material in the first active material layer is limited, leading to a relatively fast increase in swelling rate of the battery; and when the mass ratio of the second active material layer to the first active material layer is greater than 2, the wetting time significantly increases, indicating that the first active material layer of a higher compacted density is less susceptible to wetting, and an excessively high compacted density may cause particle fracture in the first active material layer. Therefore, the mass ratio of the second active material layer to the first active material layer preferably ranges from 0.2:1 to 2:1.

In some embodiments, the second active material layer further includes an inorganic material, and a ratio of the particle size $D_v50$ of the inorganic material to the particle size $D_v50$ of the second graphite material is less than 0.23. Due to the addition of the inorganic material, and by limiting the ratio of the particle size $D_v50$ of the inorganic material to the

particle size $D_v50$ of the second graphite material to less than 0.23, the inorganic material can fill the gaps in the second graphite material, providing lubrication and buffering effects on the second graphite material, mitigating the issue of particle fracture in the second graphite material, mitigating the overpressure issue of the negative electrode plate, and enhancing the cycling performance of the secondary battery. In addition, when the secondary battery includes a free electrolyte solution, the addition of the inorganic material can enhance the wetting of the free electrolyte solution and increase the retention of the free electrolyte solution in the negative electrode plate, thereby mitigating interfacial issues, increasing ion conduction efficiency, and enhancing the kinetic performance of the secondary battery.

In some embodiments, the ratio of the particle size $D_v50$ of the inorganic material to the particle size $D_v50$ of the second graphite material is 0.04 to 0.1. With this limitation, fracture of the second graphite material particles is reduced, and the secondary battery achieves optimal capacity retention rate.

In some embodiments, the particle size $D_v50$ of the inorganic material is 0.3 μm to 2 μm, and the particle size $D_v50$ of the second graphite material is 10 μm to 15 μm.

In some embodiments, a mass percentage of the inorganic material in the second active material layer is 0.1 wt% to 5 wt%. An excessively high amount of inorganic material added affects the ED (Energy Density, energy density), while an excessively low amount added has minimal improvement in wettability. When the mass percentage of the inorganic material in the second active material layer is less than 0.1 wt%, the rate of decrease in compacted density accelerates, significantly reducing the lubrication effect of the inorganic material on the second graphite material, and the wetting time also significantly increases; and when the mass percentage of the inorganic material in the second active material layer is greater than 5 wt%, the relatively high proportion of the inorganic material in the second active material layer results in a significant reduction in energy density. Therefore, the mass percentage of the inorganic material in the second active material layer is preferably 0.1 wt% to 5 wt%.

In some embodiments, the inorganic material includes one or more selected from the group consisting of alumina, garnet, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, and barium sulfate. Thus, incorporation of the inorganic material enables beneficial effects such as enhancing the cold-pressed density of the second active material layer and mitigating the overpressure issue of the second active material layer to be achieved.

In some embodiments, the inorganic material is alumina and/or boehmite. The inorganic material has relatively good electrochemical stability and is readily available as a raw material.

In some embodiments, the secondary battery satisfies one of the following conditions:

a mass percentage of a conductive agent in the first active material layer is 0 wt% to 20 wt%;
the mass percentage of the conductive agent in the first active material layer is 0.1 wt% to 15 wt%;
the mass percentage of the conductive agent in the first active material layer is 0.1 wt% to 5 wt%; and
the mass percentage of the conductive agent in the first active material layer is 1 wt% to 5 wt%.

To address the above technical issue, another technical solution adopted by some embodiments of the present application is to provide an electric device, where the electric device includes a load and the secondary battery according to any one of the above, and the secondary battery is configured to supply power to the load.

The present application also provides a preparation method of secondary battery, including preparing the negative electrode plate by mixing a silicon-based material, a first dispersant, a conductive agent, methyl methacrylate, and azobisisobutyronitrile, dissolving the resulting mixture in deionized water to form a slurry for the first active material layer; and uniformly coating the slurry for the first active material layer on at least one surface of the negative electrode current collector.

Under the catalytic action of azobisisobutyronitrile (AIBN), methyl methacrylate (MMA) can polymerize to form the solid-state electrolyte polymethyl methacrylate (PMMA), which is then bound to the surface of the silicon-based material. This preparation method enables a more uniform distribution of PMMA in the first active material layer.

Different from the related art, in the secondary battery and electric device of these embodiments of the present application, the solid-state electrolyte is at least partially bound to the surface of silicon in the silicon-based material, forming a protective layer to reduce silicon swelling and displacement, thereby mitigating the issue of silicon-based material swelling and enhancing the structural integrity and stability of the negative electrode plate; and in addition, as compared to coating a silicon-based material with a binder in the prior art, the use of a solid-state electrolyte in the present application can enhance the lithium intercalation capability of the silicon-based material and increase the ion conduction rate in the negative electrode plate, thus improving the cycling performance of the secondary battery.

The above description is only an overview of the technical solution of the present application. For a better understanding of the technical means of the present application so that they can be implemented according to the content of the specification, and to make the above and other objectives, features, and advantages of the present application more obvious and easier to understand, the following describes specific embodiments of the present application.

## BRIEF DESCRIPTION OF DRAWINGS

One or more embodiments are used as examples for description by using corresponding accompanying drawings. These example descriptions impose no limitation on these embodiments, and elements with a same reference numeral in the accompanying drawings represent similar elements. Unless otherwise stated, the accompanying drawings impose no limitation on a scale.

FIG. 1 is a schematic diagram of a framework of an electric device according to an embodiment of the present application;
FIG. 2 is a schematic structural diagram of a negative electrode plate according to an embodiment of the present application;
FIG. 3 is a Raman spectrum of a negative electrode plate according to an embodiment of the present application;
FIG. 4 is a schematic structural diagram of another implementation of a negative electrode plate according to an embodiment of the present application;
FIG. 5 is an SEM image of a negative electrode plate according to an embodiment of the present application;
FIG. 6 is another SEM image of a negative electrode plate according to an embodiment of the present application;
FIG. 7 is a diagram of the cycle life of secondary batteries of Comparative Example 1 and Example 1 according to the present application;
FIG. 8 is a diagram of the cycle swelling rate of secondary batteries of Comparative Example 1 and Example 1 according to the present application;
FIG. 9 is a diagram of the cycle life of secondary batteries of Example 1 and Example 2 according to the present application;
FIG. 10 is a diagram of the cycle swelling rate of secondary batteries of Example 1 and Example 2 according to the present application;
FIG. 11 is a diagram of the cycle life of secondary batteries of Example 2 and Example 3 according to the present application; and
FIG. 12 is a diagram of the cycle swelling rate of secondary batteries of Example 2 and Example 3 according to the present application.

Reference numerals in the detailed description are as follows:
1000. electric device; 100. secondary battery; 200. load; 10. negative electrode plate; 1. negative electrode current collector; 2. first active material layer; and 3. second active material layer.

## DESCRIPTION OF EMBODIMENTS

To make the objectives, technical solutions, and advantages of the present application clearer, the present application is further described in detail below with reference to the drawings and embodiments. It should be understood that the specific embodiments described here are only used to explain the present application and are not used to limit the present application. It should be noted that when an element is described as "fixed to" another element, it may be directly on the other element, or one or more intervening elements may be present. When an element is described as "connected to" another element, it may be directly connected to the other element, or one or more intervening elements may be present. It should be noted that, unless conflicting, the features in these embodiments of the present application can be combined with each other and are within the protection scope of the present application. In addition, although functional modules are divided in the device schematic diagram and a logical sequence is shown in the flowchart, in some cases, the steps shown or described may be performed in a different module division or sequence than in the device schematic diagram or flowchart.

Unless otherwise defined, all technical and scientific terms used herein have the same meaning as commonly understood by those skilled in the technical field of the present application; the terms used herein are only for the purpose of describing specific embodiments and are not intended to limit the present application; the terms "include" and "have" and any variations thereof in the specification, claims, and the above description of the drawings of the present application are intended to cover non-exclusive inclusion.

In the description of some embodiments of the present application, technical terms such as "center," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial," and "circumferential," indicate orientations or positional relationships based on those shown in the drawings, and are only for the convenience of describing these embodiments of the present application and simplifying the description, rather than indicating or implying that the referred device or element must have a specific orientation, be constructed and operated in a specific orientation, and therefore should not be construed as limiting these embodiments of the present application.

In the description of these embodiments of the present application, the terms "first" and "second" are used to define components merely for the convenience of distinguishing corresponding components. Unless otherwise specified, these terms have no special meaning and should not be construed as limiting the protection scope of the present application. In the description of these embodiments of the present application, "multiple" means two or more, unless explicitly and specifically limited otherwise.

Unless otherwise defined, all technical and scientific terms used in this specification have the same meaning as commonly understood by those skilled in the technical field of the present application. The terms used in the specification of the present application are only for the purpose of describing specific embodiments and are not intended to limit the present application. The term "and/or" used in this specification includes any and all combinations of one or more related listed items.

Furthermore, the technical features involved in different embodiments of the present application described below can be combined with each other as long as they do not conflict with each other.

An embodiment of the present application provides an electric device 1000 as shown in FIG. 1, where the electric device 1000 includes a secondary battery 100 and a load 200, and the secondary battery 100 is configured to supply power to the load 200.

The electric device 1000 of this embodiment of the present application includes, but is not limited to, a Bluetooth headset, a mobile phone, a tablet, a laptop, an electric toy, an electric tool, an electric scooter, an electric vehicle, a ship, and a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

The load 200 of this embodiment of the present application may be a display, a speaker, a processor, a light-emitting device, a motor, and the like. It should be understood that the type of load 200 is not limited to these.

Referring to FIG. 2, an embodiment of the present application provides a secondary battery 100, where the secondary battery 100 includes a negative electrode plate 10, the negative electrode plate 10 includes a negative electrode current collector 1 and a first active material layer 2, the first active material layer 2 is disposed on at least one surface of the negative electrode current collector 1, the first active material layer 2 includes a silicon-based material and a solid-state electrolyte, and at least a portion of the solid-state electrolyte is bound to the surface of the silicon-based material. By configuring the first active material layer in the negative electrode plate to include a silicon-based material and a solid-state electrolyte, with at least a portion of the solid-state electrolyte bound to the surface of the silicon-based material, the solid-state electrolyte bound to the silicon-based material can effectively confine silicon, reducing silicon swelling and the resulting displacement of the silicon-based material, enhancing the structural integrity and stability of the negative electrode plate, and extending the service life of the secondary battery. The use of a solid-state electrolyte to confine the silicon-based material, as compared to the prior art where a binder is used to coat the silicon-based material, can improve the lithium intercalation capability of the silicon-based material and increase the ion conduction rate in the negative electrode plate, thus mitigating the issue of deteriorated kinetic performance of the secondary battery caused solely by coating a binder on the silicon-based material.

For the above secondary battery 100, the secondary battery 100 may be a pouch battery, a prismatic battery, a cylindrical battery, or the like.

For the above negative electrode plate 10, the negative electrode plate 10 may be in a wound form or a laminated form. In some embodiments of the present application, the negative electrode plate 10 is described in a laminated form as an example. The negative electrode plate 10 includes a negative electrode current collector 1 and a first active material layer 2, where the first active material layer 2 is disposed on at least one surface of the negative electrode current collector 1. That is, the first active material layer 2 may be disposed on one surface of the negative electrode current collector 1 along the thickness direction X, or on opposing surfaces of the negative electrode current collector 1 along the thickness direction X.

The direction in which the first active material layer 2 and the negative electrode current collector 1 are stacked is defined as the thickness direction X.

It should be understood that multiple first active material layers 2 may be disposed at intervals on one surface of the negative electrode current collector 1.

For the above negative electrode current collector 1, the negative electrode current collector 1 may include copper foil, aluminum foil, nickel foil, stainless steel foil, titanium foil, nickel foam, copper foam, a polymer substrate coated with conductive metal, or any combination thereof.

For the above first active material layer 2, the active material therein is a negative electrode active material containing silicon. In some embodiments of the present application, the first active material layer 2 includes a silicon-based material and a solid-state electrolyte.

For the above silicon-based material, the silicon-based material may include one or more selected from the group consisting of elemental silicon, silicon oxide, silicon carbide, and a silicon alloy. Silicon oxide includes silicon monoxide, silicon dioxide, and other silicon oxides. Incorporation of the silicon-based material into the negative electrode plate

significantly improves the theoretical specific capacity and energy density of the negative electrode plate.

It should be noted that during charging and discharging of the secondary battery 100, the negative electrode plate 10 undergoes lithium ion extraction and insertion, causing the silicon-based material to experience volume swelling exceeding 100%. Such a high volume swelling rate compromises the structural stability and integrity of the negative electrode plate 10 and damages the solid-state electrolyte interphase (Solid-state electrolyte Interphase, SEI) film, causing the free electrolyte_solution to penetrate into the interior of the negative electrode plate 10. This triggers a series of unstable reactions such as decomposition of the free electrolyte solution and repeated damage to the SEI film, significantly reducing the cycling performance of the secondary battery 100.

For the above solid-state electrolyte, the solid-state electrolyte is at least partially bound to the surface of the silicon-based material, thereby forming a protective layer on the surface of the silicon-based material, so as to reduce the swelling and displacement of the silicon-based material, reduce the swelling or contraction of the negative electrode plate, and thus enhance the structural integrity and stability of the negative electrode plate. In addition, the solid-state electrolyte can enhance the lithium intercalation capability of the silicon-based material and accelerate the ion conduction rate in the negative electrode plate 10, thus improving the kinetic performance and cycling performance of the secondary battery 100.

In some embodiments, a mass percentage of the solid-state electrolyte in the first active material layer is 0.1 wt% to 20 wt%. Limiting the percentage of the solid-state electrolyte to not less than 0.1 wt% ensures effective bonding of the solid-state electrolyte with the silicon-based material, ensuring the confinement of the silicon-based material and the restriction on silicon swelling and displacement by the solid-state electrolyte. Limiting the percentage of the solid-state electrolyte to not more than 20 wt% ensures the percentage of the silicon-based material in the first active material layer, maintains the ED (Energy Density, energy density) of the secondary battery, and reduces lithium plating. In addition, when the percentage of the solid-state electrolyte exceeds 20 wt%, the restriction on silicon swelling and displacement is limited, and the kinetic performance of the secondary battery also deteriorates. Therefore, limiting the percentage of the solid-state electrolyte to not more than 20 wt% can not only ensure the performance of the secondary battery but also take the material cost into account.

In some embodiments, the mass percentage of the solid-state electrolyte in the first active material layer is 5 wt% to 15 wt%. To balance the confining effect of the solid-state electrolyte on the silicon-based material with the ED and cycling performance of the secondary battery, the mass percentage of the solid-state electrolyte in the first active material layer is preferably 5 wt% to 15 wt%.

In some embodiments, the solid-state electrolyte includes at least one of polymethyl methacrylate, polyvinylidene fluoride, and polyacrylonitrile. In some embodiments, the solid-state electrolyte is coated on a surface of the silicon-based material. In some embodiments, the solid-state electrolyte includes polymethyl methacrylate and/or polyacrylonitrile, silicon in the silicon-based material is connected to hydroxyl groups, and the solid-state electrolyte is bound to the hydroxyl groups. The hydroxyl groups on the surface of silicon in the silicon-based material can be obtained through modification treatment. It should be understood that the solid-state electrolyte can be obtained using conventional methods in the art.

When the solid-state electrolyte is PMMA (polymethyl methacrylate), the oxygen atoms in the carbonyl groups of PMMA forms hydrogen bonds with the hydroxyl groups on the surface of silicon, as shown in the chemical reaction formula (1) below, where R in the chemical formula represents the portion of PMMA excluding the -COOCH3 groups. In addition, under high-temperature conditions, PMMA can also form a covalent bond with the oxygen (O) atom in the hydroxyl groups, as shown in the chemical reaction formula (2) below, where R in the chemical formula represents the portion of PMMA excluding the -COOCH3 groups. The covalent bond formed between PMMA and the oxygen (O) atom in the hydroxyl groups is conducive to enhancing the binding strength between the silicon-based material and the solid-state electrolyte, further reducing silicon swelling and displacement, and reducing the swelling or contraction of the negative electrode plate.

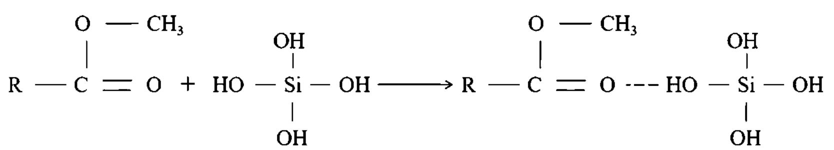

-----①

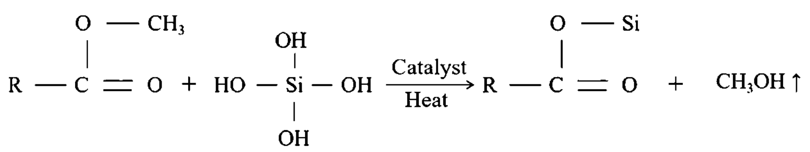


-----②

Referring to FIG. 3, FIG. 3 is a Raman spectrum of a negative electrode plate with PMMA as the solid-state electrolyte and subjected to high-temperature treatment, where the abscissa represents the Raman shift, that is, the

wavenumber difference between the scattered light and the incident light, and the ordinate represents the intensity of the scattered light, that is, photon counts. As shown in FIG. 3, the Raman spectrum of the negative electrode plate exhibits characteristic peaks of SiOOC(C6H3) and SiOOC(C6H4), proving that under high-temperature conditions, covalent bonds are formed between the O (oxygen) atoms in the hydroxyl groups on the surface of the silicon-based material and PMMA.

For the above PMMA, PMMA is formed by the free radical polymerization of MMA (methyl methacrylate). It should be noted that PMMA not only serves as a binder but also forms electronic coordination with lithium ions (Li+), facilitating ion transport, improving ion transport efficiency, and mitigating the issue of deteriorated kinetic performance of the secondary battery caused by coating a binder on silicon in the prior art.

Further, in some embodiments, the first active material layer 2 further includes AIBN (azobisisobutyronitrile). AIBN can promote the free radical polymerization of MMA (methyl methacrylate), that is improve the efficiency and conversion rate of MMA polymerizing to form PMMA.

The negative electrode plate containing PMMA prepared by the above method has a more uniform distribution of PMMA in the first active material layer compared to a negative electrode plate prepared by directly adding PMMA. This is because when PMMA is directly added, PMMA tends to aggregate on the surface of the first active material layer away from the negative electrode current collector, whereas the method of adding MMA monomer and polymerizing to form PMMA during stirring allows PMMA to be distributed more uniformly in the first active material layer, making the coating of PMMA on the silicon-based material in the first active material layer more uniform and the suppression of silicon-based material swelling more significant.

When the solid-state electrolyte is PVDF (polyvinylidene fluoride), PVDF may physically coat the surface of the silicon-based material, forming a protective layer. When the solid-state electrolyte is PAN (polyacrylonitrile), the lone pair electrons on the nitrogen (N) atoms in PAN can form hydrogen bonds with the hydroxyl groups on the surface of silicon. Both PVDF and PAN have functions similar to PMMA, that is, being at least partially bound to the surface of silicon in the silicon-based material, thereby effectively confining silicon, reducing its swelling and displacement, and compared to the binder used in the prior art, they can improve the lithium intercalation capability of the silicon-based material and increase the ion conduction rate in the negative electrode plate, thus mitigating the issue of deteriorated kinetic performance of the secondary battery caused by coating a binder on silicon.

In some embodiments, the secondary battery further includes a free electrolyte solution, thereby facilitating the transport of lithium ions, ensuring the charge-discharge rate, and further improving the kinetic performance of the secondary battery.

It should be noted that the free electrolyte solution may be filled in the secondary battery in liquid form, so that at least a portion of the free electrolyte solution can wet the first active material layer 2, thereby facilitating the transport of lithium ions.

In some embodiments, the first active material layer 2 further includes a first graphite material, and the first graphite material is mixed with the silicon-based material. When the first graphite material is mixed with the silicon-based material, the first graphite material may assist in confining silicon, further reducing silicon swelling and displacement, and further enhancing the structural integrity and stability of the negative electrode plate.

It should be noted that the first graphite material may be one or more selected from the group consisting of hard carbon, soft carbon, and graphite. The OI value of the first graphite material is less than or equal to 10.

The OI value (Orientation Index, orientation value) of a graphite material indicates the degree of grain orientation consistency in the graphite material and is an important factor in considering the low swelling characteristics of the graphite negative electrode active material. Generally, a smaller OI value indicates a higher degree of isotropy in graphite particles, and is beneficial for suppressing swelling during cycling. The OI value can be measured by performing XRD (X-ray Diffraction, X-ray diffraction) on the electrode plate to obtain characteristic peaks of graphite at 110 and 002 or 004, then calculating the OI value. When the diffraction pattern testing is performed on a horizontally placed electrode plate sample, the diffraction signal from the (110) crystal plane comes from graphite with a layer structure perpendicular to the electrode plate, while the diffraction signals from the (002) and (004) crystal planes come from graphite with a layer structure parallel to the electrode plate. Therefore, the orientation of the graphite electrode may be described by the ratio of the intensity (or integrated area) of the (002) or (004) diffraction peak to the intensity (or integrated area) of the (110) diffraction peak, that is, $OI = I(002)/I(110)$ or $OI = I(004)/I(110)$, where I(002) represents the intensity of the (002) diffraction peak, I(004) represents the intensity of the (004) diffraction peak, and I(110) represents the intensity of the (110) diffraction peak.

In some embodiments, a mass of the silicon-based material is $m_1$, a mass of the first graphite material is $m_2$, and $m_1/(m_1+m_2)$ is 5% to 30%. Limiting the ratio of the mass of the silicon-based material to the mass of the first graphite material to not less than 5% ensures the ED of the secondary battery, and limiting it to not more than 30% not only reduces lithium plating but also ensures the confining effect of the first graphite material on silicon, maintaining the structural integrity and stability of the negative electrode plate.

In some embodiments, a ratio of the particle size $D_v50$ of the silicon-based material to the particle size $D_v50$ of the first graphite material is 0.1 to 0.5.

The particle size $D_v50$ refers to a particle size at which the cumulative volume distribution of the material reaches 50% from the smaller particle size side, and the particle size $D_v50$ may be measured using a laser particle size analyzer in accordance with GB/T 19077-2016 "Particle Size Distribution Laser Diffraction Method."

It should be noted that when the ratio of the particle size $D_v50$ of the silicon-based material to the particle size $D_v50$ of the first graphite material is less than 0.1, the silicon-based material has a small particle size and a large specific surface area, leading to excessive side reactions and accelerated cycle decay of the battery. When the ratio of the particle size $D_v50$ of the silicon-based material to the particle size $D_v50$ of the first graphite material is greater than 0.5, the swelling rate of the battery increases rapidly because the particle sizes of the silicon-based material and the first graphite material are relatively close, resulting in poor co-intercalation effects between the silicon-based material and the first graphite material, causing a sharp increase in swelling rate of the battery. Therefore, the ratio of the particle size $D_v50$ of the silicon-based material to the particle size $D_v50$ of the first graphite material is preferably 0.1 to 0.5.

In some embodiments, the ratio of the particle size $D_v50$ of the silicon-based material to the particle size $D_v50$ of the first graphite material is 0.2 to 0.3. When the ratio of the particle size $D_v50$ of the silicon-based material to the particle size $D_v50$ of the first graphite material is greater than 0.3, the trend of increase in capacity retention rate becomes relatively moderate as the ratio increases, such that further increasing the ratio above 0.3 provides little benefit to capacity retention rate; when the ratio is less than 0.2, the trend of decrease in swelling rate becomes relatively moderate as the ratio decreases, such that further decreasing the swelling rate less than 0.2 provides little benefit to swelling rate. Considering both swelling rate and capacity retention rate, the ratio of the particle size $D_v50$ of the silicon-based material to the particle size $D_v50$ of the first graphite material is preferably 0.2 to 0.3.

The particle size $D_v50$ of the silicon-based material may be 4 $\mu$m to 10 $\mu$m, and the particle size $D_v50$ of the first graphite material may be 16 $\mu$m to 40 $\mu$m.

In some embodiments, the first active material layer 2 further includes a first dispersant and a conductive agent. The first dispersant, conductive agent, first graphite material, silicon-based material, and solid-state electrolyte are mixed.

For the above first dispersant, the first dispersant may be CMC (carboxymethyl cellulose sodium).

For the above conductive agent, the conductive agent can adhere to the surface of the silicon-based material, thereby increasing the electron transport efficiency of the silicon-based material. The conductive agent may be one or more selected from the group consisting of conductive carbon materials such as SP (conductive carbon black), CNT (carbon nanotubes), VGCF (vapor-grown carbon fiber), metal particles, and metal fibers. A mass percentage of the conductive agent in the first active material layer 2 is 0 wt% to 20 wt%. When the mass percentage of the conductive agent in the first active material layer 2 is greater than 20 wt%, the capacity retention rate of the secondary battery no longer increases, and as the mass percentage of the conductive agent in the first active material layer 2 increases, the energy density of the secondary battery decreases. Therefore, the mass percentage of the conductive agent in the first active material layer 2 is preferably 0 wt% to 20 wt%.

In some embodiments, referring to FIG. 4, the secondary battery 100 further includes a second active material layer 3, and the second active material layer 3 is disposed on a side of the first active material layer 2 facing away from the negative electrode current collector 1.

When two first active material layers 2 are disposed on opposing surfaces of the negative electrode current collector 1 along the thickness direction X, two second active material layers 3 may be provided, and the two second active material layers 3 may be respectively disposed on one surface of each of the two first active material layers 2 facing away from the negative electrode current collector 1.

It should be understood that a plurality of second active material layers 3 may be disposed at intervals on one surface of the first active material layer 2.

The second active material layer 3 includes a second graphite material. Further incorporation of the second active material layer 3 in the secondary battery 100 can further confine silicon, reducing silicon swelling and displacement, and enhancing the structural integrity and stability of the negative electrode plate.

The second graphite material may be one or more selected from the group consisting of hard carbon, soft carbon, and graphite. The second graphite material may be the same as the first graphite material, for example, the OI value of the second graphite material is also less than or equal to 10.

In some embodiments, the mass ratio of the second active material layer 3 to the first active material layer 2 ranges from 0.2:1 to 2:1. When the mass ratio of the second active material layer 3 to the first active material layer 2 is less than 0.2, the ability of the second active material layer 3 to restrict the swelling of the silicon-based material in the first active material layer 2 is limited, leading to a relatively fast increase in the battery swelling rate; and when the mass ratio of the second active material layer 3 to the first active material layer 2 is greater than 2, the wetting time significantly increases, indicating that first active material layer 2 of a higher compacted density is less susceptible to wetting, and an excessively high compacted density may cause particle fracture in the first active material layer 2. Therefore, the mass ratio of the second active material layer 3 to the first active material layer 2 preferably ranges from 0.2:1 to 2:1.

In some embodiments, the second active material layer 3 further includes a binder and a second dispersant.

For the above binder, the binder may be a copolymer such as PAA (polyacrylic acid), SBR (styrene-butadiene

rubber), CMC (carboxymethyl cellulose sodium), PVDF (polyvinylidene fluoride), PAN (polyacrylonitrile), and PVA (polyvinyl alcohol), and functionalized derivatives or monomeric copolymers of the above polymers.

For the above second dispersant, the second dispersant may be CMC (carboxymethyl cellulose sodium).

In a specific embodiment, the mass ratio of the second graphite material, binder, and second dispersant may be 97.5:1.5:1.

In some embodiments, the second active material layer 3 further includes an inorganic material. The inorganic material may include one or more selected from the group consisting of alumina, garnet, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, and barium sulfate.

In some embodiments, the inorganic material is alumina and/or boehmite. The inorganic material has relatively good electrochemical stability, and is readily available. In some embodiments, the inorganic material is alumina having relatively high hardness.

It should be noted that during the rolling process of the negative electrode plate 10, the second active material layer 3 is subjected to greater pressure than the first active material layer 2. Thus, the compacted density of the second active material layer 3 is higher than that of the first active material layer 2, and the particles in the second active material layer 3 are more prone to fracture compared to the particles in the first active material layer 2. When particles in the first active material layer 2 and the second active material layer 3 undergo fracture, such as the first graphite material and the second graphite material fracturing, it leads to capacity loss of the secondary battery 100, reducing the cycling performance of the secondary battery 100.

In the present application, the negative electrode plate 10 contains an inorganic material, and the ratio of the particle size $D_v50$ of the inorganic material to the particle size $D_v50$ of the second graphite material is limited to less than 0.23, allowing the inorganic material to fill the gaps in the second graphite material. When the ratio is greater than 0.23, the processing window of the second graphite material begins to narrow. Referring to FIG. 5, FIG. 5 is an SEM (Scanning Electron Microscope, scanning electron microscope) image of the negative electrode plate 10, where the larger particles represent the second graphite material, and the smaller particles represent the inorganic material. As shown in FIG. 5, the inorganic material is mainly distributed in the gaps in the second graphite material. Since the inorganic material can fill the gaps in the second graphite material, it provides lubrication and buffering effects on the second graphite material, mitigating the issue of particle fracture in the second graphite material, mitigating the overpressure issue of the negative electrode plate 10, and enhancing the cycling performance of the secondary battery 100.

Referring to FIG. 6, FIG. 6 is another SEM image of the negative electrode plate 10, where the larger particles represent the second graphite material, the smaller represent are the inorganic material, the upper side is the second active material layer 3, and the lower side is the first active material layer 2. As shown in FIG. 6, after the inorganic material is added to the second active material layer 3, the second graphite material in the negative electrode plate 10 shows no overpressure phenomenon, and the porosity of the second active material layer 3 is greater than that of the first active material layer 2. When the secondary battery 100 includes a free electrolyte solution, the free electrolyte solution can easily penetrate from the second active material layer 3 to the first active material layer 2, reducing concentration polarization, thereby reducing internal resistance, extending the cycle life of the secondary battery 100, and improving the utilization rate of the secondary battery 100.

It can be understood that when the secondary battery 100 includes a free electrolyte solution, the inorganic material can form more pores in the negative electrode plate 10. This is conducive to enhancing the wetting effect of the free electrolyte solution in the negative electrode plate 10, increasing the retention of the free electrolyte solution in the negative electrode plate 10, increasing the ion transport speed of the free electrolyte solution, and improving fast-charging capability.

In some embodiments, the ratio of the particle size $D_v50$ of the inorganic material to the particle size $D_v50$ of the second graphite material is 0.04 to 0.1. With this limitation, fracture of the second graphite material particles is minimized, and the secondary battery 100 achieves optimal capacity retention rate, with a wider processing window for the second graphite material and better kinetic performance in this case. Optionally, the particle size $D_v50$ of the inorganic material is 0.3 $\mu$m to 2 $\mu$m, and the particle size $D_v50$ of the second graphite material is 10 $\mu$m to 15 $\mu$m.

In some embodiments, a mass percentage of the inorganic material in the second active material layer 3 is 0.1 wt% to 5 wt%. An excessively high amount of inorganic material added affects the ED (Energy Density, energy density), while an excessively low amount added has minimal improvement in wettability. When the mass percentage of the inorganic material in the second active material layer 3 is less than 0.1 wt%, the rate of decrease in compacted density accelerates, significantly reducing the lubrication effect of the inorganic material on the second graphite material, and the wetting time also significantly increases; and when the mass percentage of the inorganic material in the second active material layer 3 is greater than 5 wt%, the relatively high proportion of the inorganic material in the second active material layer 3 results in a significant reduction in energy density. Therefore, the mass percentage of the inorganic material in the second active material layer 3 is preferably 0.1 wt% to 5 wt%.

When the second active material layer 3 further includes a binder and a second dispersant, in a specific

embodiment, the mass ratio of the second graphite material, inorganic material, binder, and second dispersant may be 97:0.5:1.5:1.

In some embodiments, the secondary battery 100 includes a negative electrode plate 10, a separator, and a positive electrode plate. The positive electrode plate includes a positive electrode active material layer, and the positive electrode active material includes at least one of lithium cobalt oxide, lithium nickel oxide, lithium nickel cobalt manganese oxide, lithium nickel cobalt aluminum oxide, lithium manganese oxide, lithium nickel oxide, lithium iron manganese phosphate, lithium vanadium phosphate, or lithium iron phosphate. The separator may include a polymer, inorganic substance, or the like stable to the free electrolyte solution, for example, the separator may include a substrate layer and a surface treatment layer. The substrate layer is a non-woven fabric, membrane, or composite membrane with a porous structure, and the material of the substrate layer includes at least one of polyethylene, polypropylene, polyethylene terephthalate, or polyimide. Specifically, a polypropylene porous membrane, a polyethylene porous membrane, a polypropylene non-woven fabric, a polyethylene non-woven fabric, or a polypropylene-polyethylene-polypropylene porous composite membrane may be selected. A surface treatment layer is disposed on at least one surface of the substrate layer, and the surface treatment layer may be a polymer layer, an inorganic substance layer, or a layer formed by mixing a polymer and an inorganic substance. The inorganic substance layer includes inorganic particles and a binder, and the inorganic particles include at least one of alumina, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder includes at least one of polyvinylidene fluoride, a copolymer of vinylidene fluoride-hexafluoropropylene, polyamide, polyacrylonitrile, polyacrylate, polyacrylic acid, polyacrylate salt, polyvinylpyrrolidone, polyvinyl ether, polymethyl methacrylate, polytetrafluoroethylene, or polyhexafluoropropylene. The polymer layer contains a polymer, and the polymer material includes at least one of polyamide, polyacrylonitrile, acrylate polymer, polyacrylic acid, polyacrylate salt, polyvinylpyrrolidone, polyvinyl ether, polyvinylidene fluoride, or poly(vinylidene fluoride-hexafluoropropylene).

To evaluate the beneficial effects of the secondary battery 100 of the present application, tests were conducted, with PMMA acting as the solid-state electrolyte. In the following examples and comparative examples, all reagents, materials, and instruments used are commercially available unless otherwise specified.

[Preparation method]

Example 1

Preparation of slurry for first active material layer 2

The first graphite material, silicon-based material, first dispersant, conductive agent, MMA (methyl methacrylate), and AIBN (azobisisobutyronitrile) were mixed at a mass ratio of 80:10:2:2:5.5:0.5, dissolved in deionized water to form a slurry for the first active material layer with a solid content of 40%, and stirred uniformly for coating. The silicon-based material used was $SiO2$ (silicon dioxide), the first graphite material used was graphite particles, the first dispersant used was CMC (carboxymethyl cellulose sodium), and the conductive agent used was conductive carbon black.

Preparation of negative electrode plate 10

The slurry for the first active material layer 2 was uniformly coated on one surface of a 10 μm thick copper foil negative electrode current collector 1 using an extrusion coater, and dried at 110°C, thereby obtaining a negative electrode plate 10 coated on one side with the first active material layer 2. After drying, the coating thickness of the first active material layer 2 was 150 μm. Then, the above coating step was repeated on another surface of the negative electrode current collector 1 to obtain a negative electrode plate 10 coated on two sides with the first active material layer 2.

After coating, the negative electrode plate 10 was dried, cold-pressed, and cut into sheets with dimensions of 74 mm × 867 mm for use. The compacted density of the negative electrode plate 10 was 1.7 g/cm$^3$; the adhesion between the first active material layer 2 and the negative electrode current collector 1 needed to satisfy 10 to 100 N/m; and the total porosity of the negative electrode plate 10 needed to satisfy 10% to 30%.

Preparation of slurry for positive electrode active material layer

The positive electrode active material $LiCoO2$ (lithium cobalt oxide), conductive agent conductive carbon black, and binder PVDF (polyvinylidene fluoride) were dissolved in NMP (N-methylpyrrolidone) solution at a mass ratio of 97:1.4:1.6 to form a positive electrode slurry with a solid content of 75%, and stirred uniformly for coating.

Preparation of positive electrode plate

The positive electrode slurry was uniformly coated on one surface of a 10 μm thick positive electrode current collector aluminum foil, and dried at 110°C, thereby obtaining a positive electrode plate coated on one side with the positive electrode active material layer. After drying, the coating thickness of the positive electrode active material layer was 110 μm.

Then, the above coating step was repeated on another surface of the positive electrode current collector to obtain a positive electrode plate coated on two sides with the positive electrode active material.

After coating, the positive electrode plate was dried, cold-pressed, and cut into sheets with dimensions of 74 mm × 867 mm for use. The compacted density of the positive electrode plate was 4.15 g/cm$^3$.

Preparation of electrolyte

In an environment with a water content of less than 10 ppm, organic solvents EC (ethylene carbonate), PC (propylene carbonate), DEC (diethyl carbonate), and EP (ethyl propionate) were mixed at a mass ratio of 3:1:3:3, and lithium hexafluorophosphate (LiPF6) was added to the mixed organic solvent, dissolved, and mixed uniformly to obtain the desired electrolyte. The concentration of LiPF6 was 1 mol/L.

The electrolyte is not specifically limited in the present application, and may be selected according to actual needs. In an example, additives in the electrolyte may include one or more selected from the group consisting of vinylene carbonate (VC), vinyl ethylene carbonate (VEC), succinonitrile (SN), adiponitrile (ADN), 1,3-propene sultone (PST), tris(trimethylsilyl) phosphate (TMSP), trimethyl borate (TMB), and tris(trimethylsilyl) borate (TMSB).

Preparation of separator

The separator includes a substrate layer and a coating layer. The substrate layer was 5 μm thick PE (polyethylene), and a 2 μm thick alumina ceramic layer was coated on each side of the substrate layer. A 2.5 mg of binder PVDF (polyvinylidene fluoride) was then coated on a side of the ceramic layer facing away from the substrate layer, followed by drying.

Preparation of secondary battery 100

The prepared positive electrode plate, separator, and negative electrode plate 10 were sequentially stacked in order, with the separator positioned between the positive electrode plate and the negative electrode plate 10 for separation, followed by hot-pressing to form an electrode assembly with a laminated structure.

The electrode assembly was placed in a pouch and subjected to side and top sealing, and dried in a vacuum oven at 85°C for 12 hours to remove moisture, then the prepared electrolyte was injected, followed by processes such as vacuum sealing, standing, formation (charging at a constant current of 0.02C to 3.5 V, then charging at a constant current of 0.1C to 3.9 V), shaping, and capacity testing to obtain the secondary battery 100.

Examples A1 to A10

For ease of understanding the design concept of the present application, the following lists ten specific secondary batteries provided by the present application based on Example 1. These ten specific secondary batteries correspond to specific Examples A1 to A10. In Examples A1 to A10, mass percentages of the first graphite material, silicon-based material, first dispersant, conductive agent, MMA (methyl methacrylate), and AIBN (azobisisobutyronitrile) in the first active material layer 2 slurry were adjusted, followed by the steps such as coating and drying in Example 1, resulting that the mass percentages of the solid-state electrolyte in the first active material layer 2 were 0.01 wt%, 0.05 wt%, 0.1 wt%, 1 wt%, 5.5 wt%, 10 wt%, 15 wt%, 20 wt%, 25 wt%, and 30 wt%, respectively, with the remaining steps identical to those in Example 1.

Comparative Example 1

The difference from Example 1 is that the slurry for the first active material layer 2 included no MMA (methyl methacrylate) and AIBN (azobisisobutyronitrile), and PAA (polyacrylic acid) was used as the binder in the slurry for the first active material layer, with a mass ratio of the first graphite material, silicon-based material, first dispersant, conductive agent, and PAA of 80:10:2:2.5:5.5.

Examples B1 to B9

To investigate the preferred mass ratio range of the silicon-based material to the first graphite material, nine specific secondary batteries provided by the present application are listed based on Example 1, corresponding to specific Examples B1 to B9. In Examples B1 to B9, the mass percentages of the silicon-based material in the total mass of the first graphite material and the silicon-based material were 1%, 3%, 5%, 10%, 15%, 20%, 25%, 30%, and 35%, respectively, with the remaining steps identical to those in Example 1. The number of battery cycles was 300.

Examples C1 to C11

To investigate the preferred ratio range of the particle size $D_v50$ of the silicon-based material to the particle size $D_v50$ of the first graphite material, eleven specific secondary batteries provided by the present application are listed based on Example 1, corresponding to specific Examples C1 to C11. In Examples C1 to C11, the ratios of the particle size $D_v50$ of the silicon-based material to the particle size $D_v50$ of the first graphite material were 0.03, 0.05, 0.1, 0.15, 0.2, 0.25, 0.3, 0.4, 0.5, 0.6, and 0.7, respectively, with the remaining steps identical to those in Example 1. The number of battery cycles was 300.

Examples D1 to D10

To investigate the preferred range of the mass ratio of the conductive agent to the first active material layer 2, ten specific secondary batteries provided by the present application are listed based on Example 1, corresponding to specific Examples D1 to D10. In Examples D1 to D10, the mass percentages of the conductive agent in the first active material layer 2 were 0 wt%, 0.1 wt%, 1 wt%, 2 wt%, 5 wt%, 10 wt%, 15 wt%, 20 wt%, 30 wt%, and 40 wt%, respectively, with the remaining steps identical to those in Example 1. The number of battery cycles was 300.

Example 2

The difference from Example 1 is described below.

The negative electrode plate 10 further included a second active material layer 3, where the second active material layer 3 included a second graphite material, a binder, and a second dispersant, with a mass ratio of the second graphite material, binder, and second dispersant of 97.5:1.5:1.

The preparation of the negative electrode slurry further includes:

Slurry for the second active material layer: The second graphite material, binder, and second dispersant were mixed at a mass ratio of 97.5:1.5:1, dissolved in deionized water to form a negative electrode slurry with a solid content of 50%, and stirred uniformly for coating. The second graphite material used was graphite particles, the binder used was SBR (styrene-butadiene rubber), and the second dispersant used was CMC (carboxymethyl cellulose sodium).

The preparation process of the negative electrode plate 10 was modified as follows:

Using a dual-layer coater, the slurry for the first active material layer and the slurry for the second active material layer were simultaneously coated uniformly on one surface of a 10 μm thick copper foil negative electrode current collector 1, and dried at 110°C, thereby obtaining a negative electrode plate 10 coated on one side with a dual-layer negative electrode active material. The coating thickness of the dual-layer negative electrode active material was 150 μm after drying. In this step, since the slurry for the second active material layer was coated on the undried slurry for the first active material layer, the first active material layer 2 and the second active material layer 3 were mutually interpenetrated, with no obvious interface, resulting in low interface impedance, and this is conducive to mitigating the interfacial issues between the first active material layer 2 and the second active material layer 3. Then, the above coating steps were repeated on another surface of the negative electrode plate 10 to obtain a negative electrode plate 10 coated on two sides with a dual-layer negative electrode active material.

After coating, the negative electrode plate 10 was dried, cold-pressed, and cut into sheets with dimensions of 74 mm × 867 mm for use.

Examples E1 to E10

To investigate the preferred range of the mass ratio of the second active material layer 3 to the first active material layer 2, ten specific secondary batteries provided by the present application are listed based on Example 2, corresponding to specific Examples E1 to E10. In Examples E1 to E10, the mass ratios of the second active material layer 3 to the first active material layer 2 were 0.05, 0.1, 0.2, 0.3, 0.5, 1, 1.5, 2, 2.5, and 3, respectively, with the remaining steps identical to those in Example 2. The number of battery cycles was 300.

Example 3

The difference from Example 2 is that: The second active material layer 3 further included an inorganic material, with a mass ratio of the second graphite material, inorganic material, binder, and second dispersant of 97:0.5:1.5:1.

Examples F1 to F13

To investigate the preferred range of the ratio of the particle size $D_v50$ of the inorganic material to the particle size $D_v50$ of the second graphite material, thirteen specific secondary batteries provided by the present application are listed based on Example 3, corresponding to specific Examples F1 to F13. In Examples F1 to F13, the ratios of the particle size $D_v50$ of the inorganic material to the particle size $D_v50$ of the second graphite material were 0.03, 0.035, 0.04, 0.045, 0.05, 0.1, 0.15, 0.2, 0.21, 0.22, 0.23, 0.24, and 0.25, respectively, with the remaining steps identical to those in Example 3. The number of battery cycles was 300.

Examples G1 to G11

To investigate the preferred range of the mass percentage of the inorganic material in the second active material layer 3, eleven specific secondary batteries provided by the present application are listed based on Example 3, corresponding to specific Examples G1 to G11. In Examples G1 to G11, the mass percentages of the inorganic material in the second active material layer 3 were 0.01 wt%, 0.05 wt%, 0.1 wt%, 0.5 wt%, 1 wt%, 2 wt%, 3 wt%, 4 wt%, 5 wt%, 6 wt%, and 7 wt%, respectively, with the remaining steps identical to those in Example 3. The number of battery cycles was 300.

[Test methods]

The following related tests were conducted on the secondary batteries 100 of Example 1, Examples A1 to A10, Comparative Example 1, Examples B1 to B9, Examples C1 to C11, Examples D1 to D10, Example 2, Examples E1 to E10, Example 3, Examples F1 to F13, and Examples G1 to G11. Unless explicitly specified, the test temperature was assumed to be room temperature, 25°C.

(1) Test for capacity retention rate

Charging: In a high-temperature oven at 45°C, the battery was charged at a constant current of 2C to the upper voltage window, then charged at constant voltage until the current reached 0.05C, then left standing for 5 minutes.

Discharging: Discharged at 0.7C until 3.0 V.

According to the above charge-discharge method, the discharge capacity of each cycle was recorded and divided by the initial capacity to obtain the capacity retention rate for each cycle. The discharge capacity of the first discharge was defined as the initial discharge capacity and taken as 100%.

For example, the capacity retention rate after 300 cycles = (discharge capacity of the 300th cycle / discharge capacity of the first cycle) $\times$ 100%.

(2) Test for swelling rate of secondary battery 100

Thicknesses of the secondary battery 100 at three positions were measured, and the average was taken.

During cycling, average thicknesses of the battery were recorded, and the difference between the average thickness after each cycle and an initial average thickness was divided by the initial average thickness to obtain a battery swelling rate. The average thickness of the battery at a cycle number of 0 was defined as the initial average thickness.

For example, the battery swelling rate after 300 cycles = [(average thickness after the 300th cycle - initial average thickness) / initial average thickness] $\times$ 100%.

(3) Test for lithium plating degree of negative electrode plate 10

The secondary battery 100 after 300 cycles was disassembled, and the lithium plating on the negative electrode plate 10 was visually observed, with the lithium plating degree judged as "slight," "moderate," or "severe" based on the following criteria:

1. Slight: The number of lithium plating spots on each negative electrode plate 10 were fewer than 3, and/or the area of

lithium plating accounted for less than 10% of the area of the negative electrode plate 10;
2. Moderate: The number of lithium plating spots on each negative electrode plate 10 were 3 or more but 10 or fewer, and/or the area of lithium plating accounted for 10% or more but 50% or less of the area of the negative electrode plate 10;
3. Severe: The number of lithium plating spots on each negative electrode plate 10 were more than 10, and/or the area of lithium plating accounted for more than 50% of the area of the negative electrode plate 10.

(4) Ionic conductivity test

An SS/SE/SS symmetric cell was assembled using stainless steel (abbreviated as SS) and the electrolyte (abbreviated as SE) for EIS testing to obtain the resistance R, then a test result was calculated according to the ionic conductivity formula. The resistivity $\rho$ = RS/L, and the conductivity = 1/$\rho$ = L/RS, where S is the cross-sectional area of the battery, and L is the thickness of the battery.

(5) Adhesion test

1. The negative electrode plate 10 was hot-pressed at 85°C and 2 MPa for 10 minutes, then cooled, followed by a test for peel strength between the first active material layer 2 and the current collector 1;
2. A layer of double-sided tape was attached to a steel plate, the negative electrode plate 10 was placed flat and lightly pressed onto the double-sided tape, and a layer of test tape was attached on top of the negative electrode plate 10, followed by rolling a handheld pressure roller (2000 g) back and forth three times on the test tape;
3. One end of the tape was peeled to the middle of the sample, and a testing tensile machine was used for 180-degree peeling at a peel rate of 50 mm/min for 1 minute; and
4) The tensile force value was divided by the width of the corresponding tape to obtain the final peel strength in N/m.

(6) Wetting time test

An equal volume of free electrolyte solution, such as 0.05 ml of free electrolyte solution, was dropped onto different negative electrode plates 10, and the time for the free electrolyte solution to be completely absorbed was observed.

(7) Test for volumetric energy density of secondary battery 100

The secondary battery 100 was placed in a constant temperature chamber at 25°C $\pm$ 2°C and left standing for 30 minutes to reach a constant temperature. The constant-temperature secondary battery was charged at a constant current of 0.5C to the full charge voltage, then charged at constant voltage until the current reached 0.05C, discharged at 0.2C to a voltage of 3.0 V, and the discharge energy was recorded.

Volumetric energy density = discharge energy / (length of secondary battery 100 $\times$ width of secondary battery 100 $\times$ thickness of secondary battery 100).

[Experimental results]

Impact of solid-state electrolyte vs. binder in the prior art on secondary battery performance

FIG. 7 is a diagram of the cycle life of secondary batteries of Comparative Example 1 and Example 1. As shown in FIG. 7, under the same number of cycles, the secondary battery of Example 1 has an improved capacity retention rate compared to the secondary battery of Comparative Example 1, indicating that replacing the binder in the first active material layer 2 with PMMA can reduce silicon swelling and displacement, thereby improving the capacity retention rate of the secondary battery 100 and enhancing its cycling performance.

FIG. 8 is a diagram of the cycle swelling rate of secondary batteries of Comparative Example 1 and Example 1. As shown in FIG. 8, under the same number of cycles, the secondary battery of Example 1 has a reduced swelling rate compared to the secondary battery of Comparative Example 1. Therefore, replacing the binder in the first active material layer 2 with PMMA can reduce silicon swelling and displacement, reducing the swelling rate of the secondary battery 100. Since the secondary battery of Comparative Example 1 exhibited a significant capacity decline and a large swelling rate, testing was stopped after 300 cycles.

The lithium plating degree of Comparative Example 1 and Example 1 was tested, with the lithium plating degree of the negative electrode plate 10 of Comparative Example 1 being "severe" and that of Example 1 being "moderate," proving that replacing the binder in the first active material layer 2 with PMMA can mitigate the lithium plating issue of the negative electrode plate 10, improving the cycling performance of the secondary battery 100.

The ionic conductivity of Comparative Example 1 and Example 1 was tested, with the ionic conductivity of the negative electrode plate of Example 1 being $1.2 \times 10^{-3}$ S/cm to $6 \times 10^{-3}$ S/cm, and that of Comparative Example 1 being $1.2 \times 10^{-5}$ S/cm to $8 \times 10^{-4}$ S/cm, indicating that adding PMMA to the first active material layer 2 can improve the kinetic performance of the secondary battery 100.

Impact of mass percentage of solid-state electrolyte in first active material layer 2 on secondary battery performance

Table 1 below shows the performance of the secondary batteries corresponding to Examples A1 to A10. In Examples A1 to A10, the mass percentages of the solid-state electrolyte in the first active material layer 2 were 0.01 wt%, 0.05 wt%, 0.1 wt%, 1 wt%, 5.5 wt%, 10 wt%, 15 wt%, 20 wt%, 25 wt%, and 30 wt%, respectively.

Table 1

| | Solid-state electrolyte mass percentage (wt%) | Swelling rate (%) | Lithium plating degree (no plating, slight, moderate, or severe) | Capacity retention rate (%) | Adhesion (N/m) |
|---|---|---|---|---|---|
| Example A1 | 0.01 | 13.5 | no plating | 70.1 | 8 |
| Example A2 | 0.05 | 13.1 | no plating | 73.3 | 8 |
| Example A3 | 0.1 | 12.7 | no plating | 76.5 | 10 |
| Example A4 | 1 | 12.3 | no plating | 81.7 | 10 |
| Example A5 | 5 | 11.7 | no plating | 84.4 | 13 |
| Example A6 | 10 | 11.2 | slight | 86.1 | 16 |
| Example A7 | 15 | 10.8 | slight | 87.0 | 18 |
| Example A8 | 20 | 10.6 | moderate | 87.5 | 20 |
| Example A9 | 25 | 11.5 | severe | 86.1 | 25 |
| Example A10 | 30 | 12.4 | severe | 80.2 | 28 |

It should be noted that in Table 1, the mass ratio of the first graphite material, silicon-based material, first dispersant, conductive agent, and AIBN (azobisisobutyronitrile) in the slurry for the first active material layer was 80:10:2:2:0.5, and the mass ratio of MMA to be added to the substances in the slurry for the first active material layer was calculated based on the mass percentage of the solid-state electrolyte PMMA in Table 1.

As shown in Table 1, when the mass percentage of the solid-state electrolyte in the first active material layer 2 is less than 0.1 wt%, the ability of the solid-state electrolyte to restrict the swelling of the silicon-based material is limited, resulting in a larger swelling rate and smaller capacity retention rate of the secondary battery; and in addition, the adhesion between the separator and the negative electrode plate 10 does not meet the minimum industry requirement of 10 N/m, likely to cause the first active material layer 2 to pulverize or detach. This is because, in addition to suppressing the swelling and displacement of the silicon material and acting as an electrolyte, the solid-state electrolyte also functions as a binder in the present application. Insufficient addition of the solid-state electrolyte affects the adhesion between the first active material layer 2 and the negative electrode current collector 1. When the mass percentage of the solid-state electrolyte in the first active material layer 2 is greater than 20 wt%, severe lithium plating occurs in the negative electrode plate, leading to an increased swelling rate and reduced capacity retention rate of the secondary battery. It should be particularly noted that when the mass percentage of the solid-state electrolyte in the first active material layer 2 is less than or equal to 20 wt%, the swelling rate of the negative electrode plate 10 decreases. This is because the suppression effect of the solid-state electrolyte on silicon swelling and displacement becomes more significant with an increasing mass percentage of the solid-state electrolyte, which is easily understandable. When the mass percentage of the solid-state electrolyte in the first active material layer 2 exceeds 20 wt%, the swelling rate of the negative electrode plate 10 increases instead. This is not because the solid-state electrolyte is less effective at suppressing silicon swelling, but because an excessively high proportion of the solid-state electrolyte reduces the proportion of active material in the negative electrode plate, leading to severe lithium plating, and the precipitated lithium dendrites cause an increase in the volume of the secondary battery 100, manifested as an increased swelling rate. Therefore, the mass percentage of the solid-state electrolyte in the first active

material layer 2 is preferably 0.1 wt% to 20 wt%.

Impact of mass percentage of silicon-based material to first graphite material on secondary battery performance

Table 2 below shows the performance of the secondary batteries corresponding to Examples B1 to B9. In Examples B1 to B9, the mass percentages of the silicon-based material in a total mass of the first graphite material and the silicon-based material were 1%, 3%, 5%, 10%, 15%, 20%, 25%, 30%, and 35%, respectively.

Table 2

| | $m_1/(m_1+m_2)$ (%) | Swelling rate (%) | Lithium plating degree (slight, moderate, or severe) | Energy density (Wh/L) |
|---|---|---|---|---|
| Example B1 | 1 | 8.1 | slight | 643 |
| Example B2 | 3 | 9.5 | slight | 704 |
| Example B3 | 5 | 10.7 | slight | 755 |
| Example B4 | 10 | 11.7 | slight | 791 |
| Example B5 | 15 | 12.0 | slight | 826 |
| Example B6 | 20 | 12.3 | slight | 852 |
| Example B7 | 25 | 12.7 | slight | 873 |
| Example B8 | 30 | 12.8 | slight | 900 |
| Example B9 | 35 | 13.0 | moderate | 930 |

It should be noted that in Table 2, the first dispersant, conductive agent, MMA (methyl methacrylate), and AIBN (azobisisobutyronitrile) were added at a mass ratio of 2:2:5.5:0.5, and the mass ratio of the silicon-based material and the first graphite material to the components in the slurry for the first active material layer was calculated based on $m_1/(m_1+m_2)$ in Table 2.

As shown in Table 2, when $m_1/(m_1+m_2)$ is greater than 30, the increased content of the silicon-based material limited the ability of the solid-state electrolyte to restrict the swelling of the silicon-based material, resulting in a larger swelling rate, smaller capacity retention rate, and severe lithium plating, and deteriorated kinetic performance of the battery; and when $m_1/(m_1+m_2)$ is less than 5%, the ED (Energy Density, energy density) of the battery decreases sharply. Therefore, the ratio of the mass of the silicon-based material to the total mass of the first graphite material and the silicon-based material is preferably 5% to 30%.

Impact of particle size ratio of silicon-based material to first graphite material on secondary battery performance

Table 3 below shows the performance of the secondary batteries corresponding to Examples C1 to C11. In Examples C1 to C11, the ratios of the particle size $D_v50$ of the silicon-based material to the particle size $D_v50$ of the first graphite material were 0.03, 0.05, 0.1, 0.15, 0.2, 0.25, 0.3, 0.4, 0.5, 0.6, and 0.7, respectively.

Table 3

| | Ratio of particle size $D_v50$ of silicon-based material to particle size $D_v50$ of first graphite material | Swelling rate (%) | Capacity retention rate (%) |
|---|---|---|---|
| Example C1 | 0.03 | 10.6 | 70.1 |
| Example C2 | 0.05 | 10.6 | 73.3 |
| Example C3 | 0.1 | 10.7 | 76.5 |
| Example C4 | 0.15 | 10.8 | 81.7 |
| Example C5 | 0.2 | 11.0 | 84.4 |
| Example C6 | 0.25 | 11.3 | 86.1 |
| Example C7 | 0.3 | 12.0 | 87.0 |

(continued)

| | Ratio of particle size $D_v50$ of silicon-based material to particle size $D_v50$ of first graphite material | Swelling rate (%) | Capacity retention rate (%) |
|---|---|---|---|
| Example C8 | 0.4 | 13.1 | 87.5 |
| Example C9 | 0.5 | 14.3 | 87.9 |
| Example C10 | 0.6 | 15.9 | 88.2 |
| Example C11 | 0.7 | 17.3 | 88.3 |

As shown in Table 3, when the ratio of the particle size $D_v50$ of the silicon-based material to the particle size $D_v50$ of the first graphite material is less than 0.1, the capacity retention of the secondary battery 100 decreases rapidly because the smaller particle size of the silicon-based material results in a larger specific surface area, leading to excessive side reactions and accelerated cycle decay of the secondary battery 100; and when the ratio of the particle size $D_v50$ of the silicon-based material to the particle size $D_v50$ of the first graphite material is greater than 0.5, the swelling rate of the secondary battery 100 increases rapidly because the particle sizes of the silicon-based material and the first graphite material are relatively close, resulting in poor co-intercalation effects between the silicon-based material and the first graphite material, causing a sharp increase in swelling rate of the secondary battery 100. Therefore, the ratio of the particle size $D_v50$ of the silicon-based material to the particle size $D_v50$ of the first graphite material is preferably 0.1 to 0.5.

Further observation of the data in Table 3 shows that when the ratio of the particle size $D_v50$ of the silicon-based material to the particle size $D_v50$ of the first graphite material is greater than 0.25, the trend of increase in capacity retention rate becomes relatively moderate as the ratio increases, such that further increasing the ratio provides little benefit to capacity retention rate when the ratio is greater than 0.25; and when the swelling rate is less than 0.25, the trend of decrease in swelling rate becomes relatively moderate as the ratio decreases, such that further decreasing the ratio provides little benefit to swelling rate when the ratio is less than 0.25. Considering both swelling rate and capacity retention rate, the ratio of the particle size $D_v50$ of the silicon-based material to the particle size $D_v50$ of the first graphite material is preferably 0.25, where the particle size $D_v50$ of the silicon-based material may be 4 μm to 10 μm, and the particle size $D_v50$ of the first graphite material may be 16 μm to 40 μm.

Impact of mass ratio of conductive agent to first active material layer 2 on secondary battery performance

Table 4 below shows the performance of the secondary batteries corresponding to Examples D1 to D10. In Examples D1 to D10, the mass percentages of the conductive agent in the first active material layer 2 were 0 wt%, 0.1 wt%, 1 wt%, 2 wt%, 5 wt%, 10 wt%, 15 wt%, 20 wt%, 30 wt%, and 40 wt%, respectively.

Table 4

| | Conductive agent mass percentage (wt%) | Energy density (Wh/L) | Capacity retention rate (%) |
|---|---|---|---|
| Example D 1 | 0 | 788 | 65.3 |
| Example D2 | 0.1 | 787.7 | 70.1 |
| Example D3 | 1 | 784 | 76.5 |
| Example D4 | 2 | 778 | 81.7 |
| Example D5 | 5 | 764 | 84.4 |
| Example D6 | 10 | 737 | 86.1 |
| Example D7 | 15 | 707 | 87.0 |
| Example D8 | 20 | 680 | 87.5 |
| Example D9 | 30 | 617 | 87.5 |
| Example D10 | 40 | 550 | 87.5 |

It should be noted that in Table 4, the mass ratio of the first graphite material, silicon-based material, MMA (methyl methacrylate), AIBN (azobisisobutyronitrile), and first dispersant was 80:10:5.5:0.5:2, and the mass ratio of the conductive agent to the components in the slurry for the first active material layer was calculated based on the conductive agent mass

percentage in Table 4.

As shown in Table 4, when the mass percentage of the conductive agent in the first active material layer 2 is greater than 20 wt%, the capacity retention rate no longer increases, and as the mass percentage of the conductive agent in the first active material layer 2 increases, the energy density of the secondary battery 100 decreases rapidly. Therefore, the mass percentage of the conductive agent in the first active material layer 2 is preferably 0 wt% to 20 wt%. Further, the mass percentage of the conductive agent in the first active material layer 2 is preferably 0.1 wt% to 15 wt%. Further, the mass percentage of the conductive agent in the first active material layer 2 is preferably 0.1 wt% to 5 wt%. Further, the mass percentage of the conductive agent in the first active material layer 2 is preferably 1 wt% to 5 wt%.

Impact of second active material layer 3 on secondary battery performance

FIG. 9 is a diagram of the cycle life of secondary batteries of Example 1 and Example 2. As shown in FIG. 9, under the same number of cycles, the secondary battery of Example 2 has an improved capacity retention rate compared to the secondary battery of Example 1, indicating that the addition of a second active material layer 3 containing a second graphite material on the surface of the first active material layer 2 can further reduce silicon swelling and displacement, improving the cycling performance of the secondary battery 100.

FIG. 10 is a diagram of the cycle swelling rate of the secondary batteries of Example 1 and Example 2. As shown in FIG. 10, under the same number of cycles, the secondary battery of Example 2 has a reduced swelling rate compared to the secondary battery of Example 1, indicating that the addition of a second active material layer 3 containing a second graphite material on the surface of the first active material layer 2 can further reduce silicon swelling and displacement, further reducing the swelling rate of the secondary battery 100.

The lithium plating degree of the negative electrode plate 10 of Example 1 and Example 2 was tested, with the lithium plating degree of Example 1 being "moderate" and that of Example 2 being "slight," indicating that the addition of a second active material layer 3 containing a second graphite material on the surface of the first active material layer 2 can mitigate the lithium plating issue of the negative electrode plate 10, improving the cycling performance of the secondary battery 100.

Impact of mass ratio of second active material layer 3 to first active material layer 2 on secondary battery performance

Table 5 below shows the performance of the secondary batteries corresponding to Examples E1 to E10. In Examples E1 to E10, the mass ratios of the second active material layer 3 to the first active material layer 2 were 0.05, 0.1, 0.2, 0.3, 0.5, 1, 1.5, 2, and 2.5, respectively.

Table 5

| | Mass ratio of second active material layer 3 to first active material layer 2 | Swelling rate (%) | Wetting time (s) |
|---|---|---|---|
| Example E1 | 0.05 | 11.6 | 21 |
| Example E2 | 0.1 | 10.9 | 21 |
| Example E3 | 0.2 | 10.4 | 22 |
| Example E4 | 0.3 | 9.9 | 22 |
| Example E5 | 0.5 | 9.7 | 23 |
| Example E6 | 1 | 9.6 | 23 |
| Example E7 | 1.5 | 9.6 | 23 |
| Example E8 | 2 | 9.5 | 25 |
| Example E9 | 2.5 | 9.5 | 30 |
| Example E10 | 3 | 9.4 | 33 |

It should be noted that in Table 5, the mass of the second active material layer 3 to the first active material layer 2 was controlled by controlling the coating thickness of the slurry for the first active material layer and the slurry for the second active material layer, where a total coating thickness of the second active material layer 3 and the first active material layer 2 was 150 $\mu$m.

As shown in Table 5, when the mass ratio of the second active material layer 3 to the first active material layer 2 is less than 0.2, the ability of the second active material layer 3 to restrict the swelling of the silicon-based material in the first

active material layer 2 is limited, leading to a relatively fast increase in swelling rate of the secondary battery 100; and when the mass ratio of the second active material layer 3 to the first active material layer 2 is greater than 2, the wetting time significantly increases, indicating that the first active material layer 2 of a higher compacted density is less susceptible to wetting, and an excessively high compacted density may cause particle fracture in the first active material layer 2. Therefore, the mass ratio of the second active material layer 3 to the first active material layer 2 is preferably in the range of 0.2:1 to 2:1.

Impact of inorganic material in second active material layer 3 on secondary battery performance

FIG. 11 is a diagram of the cycle life of secondary batteries 100 of Example 2 and Example 3. As shown in FIG. 11, under the same number of cycles, the secondary battery 100 of Example 3 has an improved capacity retention rate compared to the secondary battery 100 of Example 2, indicating that the addition of an inorganic material to the second active material layer 3, with the ratio of the particle size $D_v50$ of the inorganic material to the particle size $D_v50$ of the second graphite material being less than 0.1, can provide lubrication and buffering effects to the second graphite material, reducing particle fracture, decreasing capacity loss of the secondary battery 100, and improving the cycling performance of the secondary battery 100.

FIG. 12 is a diagram of the cycle swelling rate of the secondary batteries 100 of Example 2 and Example 3. As shown in FIG. 12, under the same number of cycles, the battery of Example 3 has a reduced swelling rate compared to the battery of Example 2, indicating that the addition of an inorganic material to the second active material layer 3 can further reduce the swelling rate of the secondary battery 100.

The lithium plating degree of the negative electrode plate 10 of Example 2 and Example 3 was tested, with the lithium plating degree of the negative electrode plate 10 of Example 2 being "slight" and that of the negative electrode plate 10 of_Example 3 also being "slight," but the secondary battery of Example 3 has a smaller lithium plating degree compared to the secondary battery of Example 2, indicating that the addition of a second active material layer 3 containing a second graphite material and inorganic particles on the surface of the first active material layer 2 can further mitigate the lithium plating issue of the negative electrode plate 10, improving the cycling performance of the secondary battery 100. Since the lithium plating degree of the negative electrode plate 10 is reduced, the swelling rate of the secondary battery 100 is also reduced.

Impact of ratio of particle size $D_v50$ of inorganic material to particle size $D_v50$ of second graphite material on secondary battery performance

Table 6 below shows the performance of the secondary batteries corresponding to Examples F1 to F13. In Examples F1 to F13, the ratios of the particle size $D_v50$ of the inorganic material to the particle size $D_v50$ of the second graphite material were 0.03, 0.035, 0.04, 0.045, 0.05, 0.1, 0.15, 0.2, 0.21, 0.22, 0.23, 0.24, and 0.25, respectively.

Table 6

| | Ratio of particle size $D_v50$ of inorganic material to particle size $D_v50$ of second graphite material | Compacted density (g/cm$^3$) | Capacity retention rate (%) |
|---|---|---|---|
| Example F1 | 0.03 | 1.70 | 94.1 |
| Example F2 | 0.035 | 1.70 | 94.6 |
| Example F3 | 0.04 | 1.70 | 94.9 |
| Example F4 | 0.045 | 1.70 | 95.1 |
| Example F5 | 0.05 | 1.70 | 95.0 |
| Example F6 | 0.1 | 1.70 | 94.8 |
| Example F7 | 0.15 | 1.70 | 94.4 |
| Example F8 | 0.2 | 1.70 | 94.3 |
| Example F9 | 0.21 | 1.70 | 94.3 |
| Example F10 | 0.22 | 1.69 | 94.2 |
| Example F11 | 0.23 | 1.67 | 94.1 |
| Example F12 | 0.24 | 1.65 | 94.0 |

(continued)

| | Ratio of particle size $D_v50$ of inorganic material to particle size $D_v50$ of second graphite material | Compacted density ($g/cm^3$) | Capacity retention rate (%) |
|---|---|---|---|
| Example F13 | 0.25 | 1.62 | 94.0 |

As shown in Table 6, when the ratio of the particle size $D_v50$ of the inorganic material to the particle size $D_v50$ of the second graphite material is 0.045, the capacity retention rate is optimal. This is because, at a ratio of 0.045, the overall overpressure condition of the first active material layer 2 and the second active material layer 3 is good, with minimal particle fracture, low capacity loss, and good kinetic performance of the secondary battery 100. When the ratio is greater than 0.23, the compacted density begins to decrease, and the processing window of the second graphite material begins to narrow. Therefore, the ratio of the particle size $D_v50$ of the inorganic material to the particle size $D_v50$ of the second graphite material should be less than 0.23, preferably 0.045.

Impact of mass percentage of inorganic material in second active material layer 3 on secondary battery performance

Table 7 below shows the performance of the secondary batteries corresponding to Examples G1 to G11. In Examples G1 to G11, the mass percentages of the inorganic material in the second active material layer 3 were 0.01 wt%, 0.05 wt%, 0.1 wt%, 0.5 wt%, 1 wt%, 2 wt%, 3 wt%, 4 wt%, 5 wt%, 6 wt%, and 7 wt%, respectively.

Table 7

| | Mass percentage of inorganic material in second active material layer 3 (wt%) | Compacted density ($g/cm^3$) | Energy density (Wh/L) | Wetting time (s) |
|---|---|---|---|---|
| Example G1 | 0.01 | 1.80 | 752.8 | 28 |
| Example G2 | 0.05 | 1.80 | 752.7 | 28 |
| Example G3 | 0.1 | 1.78 | 759.3 | 26 |
| Example G4 | 0.5 | 1.78 | 776 | 24 |
| Example G5 | 1 | 1.76 | 781.3 | 22 |
| Example G6 | 2 | 1.73 | 781.8 | 21 |
| Example G7 | 3 | 1.70 | 782.1 | 20 |
| Example G8 | 4 | 1.67 | 778.7 | 19 |
| Example G9 | 5 | 1.65 | 773.6 | 18 |
| Example G10 | 6 | 1.60 | 764.0 | 18 |
| Example G11 | 7 | 1.60 | 756.6 | 18 |

It should be noted that in Table 7, the mass ratio of the second graphite material, binder, and second dispersant was 97:1.5:1, and the amount of inorganic material added was calculated based on the mass percentage of the inorganic material in the second active material layer 3 in Table 7.

As shown in Table 7, when the mass percentage of the inorganic material in the second active material layer 3 is less than 0.1 wt%, the lubrication and buffering effects of the inorganic material on the second graphite material are not significant, resulting in more active material particles being crushed during the cold-pressing of the electrode plate, leading to battery capacity loss, a smaller energy density of the secondary battery 100, a higher compacted density of the negative electrode plate 10, and a significantly prolonged wetting time of the free electrolyte solution; and when the mass percentage of the inorganic material in the second active material layer 3 is greater than 5 wt%, the inorganic material occupies a large proportion of the second active material layer 3, severely reducing the energy density. Therefore, the mass percentage of the inorganic material in the second active material layer 3 is preferably 0.1 wt% to 5 wt%.

Finally, it should be noted that the above embodiments are only used to illustrate the technical solutions of the present application and are not intended to limit them; under the concept of the present application, technical features in the above embodiments or different embodiments can also be combined, steps can be implemented in any order, and there are many other variations of different aspects of the present application as described above, which are not provided

in detail for brevity; although the present application has been described in detail with reference to the foregoing embodiments, those skilled in the art should understand that modifications can still be made to the technical solutions described in the foregoing embodiments, or equivalent substitutions can be made to some of the technical features; such modifications or substitutions do not cause the essence of the corresponding technical solutions to depart from the scope of the technical solutions of these embodiments of the present application.

## Claims

1. A secondary battery comprising a negative electrode plate; wherein, the negative electrode plate comprises a negative electrode current collector and a first active material layer, the first active material layer being disposed on at least one surface of the negative electrode current collector, the first active material layer comprising a silicon-based material and a solid-state electrolyte, wherein at least a portion of the solid-state electrolyte is bound to a surface of the silicon-based material.

2. The secondary battery according to claim 1, wherein, a mass percentage of the solid-state electrolyte in the first active material layer is 0.1 wt% to 20 wt%.

3. The secondary battery according to claim 2, wherein, the mass percentage of the solid-state electrolyte in the first active material layer is 5 wt% to 15 wt%.

4. The secondary battery according to claim 1, wherein,
the solid-state electrolyte comprises one or more selected from the group consisting of polymethyl methacrylate, polyvinylidene fluoride, and polyacrylonitrile.

5. The secondary battery according to claim 4, wherein, the solid-state electrolyte is coated on a surface of the silicon-based material.

6. The secondary battery according to claim 4, wherein the solid-state electrolyte comprises polymethyl methacrylate and/or polyacrylonitrile, silicon in the silicon-based material is connected to hydroxyl groups, and the solid-state electrolyte is bound to the hydroxyl groups.

7. The secondary battery according to any one of claims 1 to 6, wherein, the secondary battery further comprises a free electrolyte solution.

8. The secondary battery according to any one of claims 1 to 6, wherein, the first active material layer further comprises a first graphite material, the first graphite material being mixed with the silicon-based material.

9. The secondary battery according to claim 8, wherein, a mass of the silicon-based material is $m_1$, a mass of the first graphite material is $m_2$, and $m_1/(m_1+m_2)$ is 5% to 30%.

10. The secondary battery according to claim 8, wherein, a ratio of the particle size $D_v50$ of the silicon-based material to the particle size $D_v50$ of the first graphite material is 0.1 to 0.5.

11. The secondary battery according to claim 10, wherein, the ratio of the particle size $D_v50$ of the silicon-based material to the particle size $D_v50$ of the first graphite material is 0.2 to 0.3.

12. The secondary battery according to claim 10, wherein, the particle size $D_v50$ of the silicon-based material is 4 $\mu$m to 10 $\mu$m, and the particle size $D_v50$ of the first graphite material is 16 $\mu$m to 40 $\mu$m.

13. The secondary battery according to any one of claims 1 to 12, wherein, the silicon-based material comprises one or more selected from the group consisting of elemental silicon, silicon oxide, silicon carbide, and a silicon alloy.

14. The secondary battery according to any one of claims 1 to 13, wherein, the secondary battery further comprises a second active material layer disposed on a side of the first active material layer facing away from the negative electrode current collector; and
the second active material layer comprises a second graphite material.

**15.** The secondary battery according to claim 14, wherein, a mass ratio of the second active material layer to the first active material layer ranges from 0.2:1 to 2:1.

**16.** The secondary battery according to claim 14, wherein, the second active material layer further comprises an inorganic material, and a ratio of the particle size $D_v50$ of the inorganic material to the particle size $D_v50$ of the second graphite material is less than 0.23.

**17.** The secondary battery according to claim 16, wherein, the ratio of the particle size $D_v50$ of the inorganic material to the particle size $D_v50$ of the second graphite material is 0.04 to 0.1.

**18.** The secondary battery according to claim 17, wherein the particle size $D_v50$ of the inorganic material is 0.3 μm to 2 μm, and the particle size $D_v50$ of the second graphite material is 10 μm to 15 μm.

**19.** The secondary battery according to claim 16, wherein a mass percentage of the inorganic material in the second active material layer is 0.1 wt% to 5 wt%.

**20.** The secondary battery according to claim 16, wherein, the inorganic material comprises one or more selected from the group consisting of alumina, garnet, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, and barium sulfate.

**21.** The secondary battery according to claim 20, wherein, the inorganic material is alumina and/or boehmite.

**22.** The secondary battery according to any one of claims 1 to 21, wherein, the secondary battery satisfies one of the following conditions:

a mass percentage of a conductive agent in the first active material layer is 0 wt% to 20 wt%;
the mass percentage of the conductive agent in the first active material layer is 0.1 wt% to 15 wt%;
the mass percentage of the conductive agent in the first active material layer is 0.1 wt% to 5 wt%; and
the mass percentage of the conductive agent in the first active material layer is 1 wt% to 5 wt%.

**23.** An electric device comprising the secondary battery according to any one of claims 1 to 22 and a load, wherein the secondary battery is configured to supply power to the load.

**24.** A preparation method of the secondary battery according to any one of claims 1 to 22, comprising preparing the negative electrode plate by mixing a silicon-based material, a first dispersant, a conductive agent, methyl methacrylate, and azobisisobutyronitrile, dissolving the resulting mixture in deionized water to form a slurry for the first active material layer; and uniformly applying the slurry for the first active material layer onto at least one surface of the negative electrode current collector.

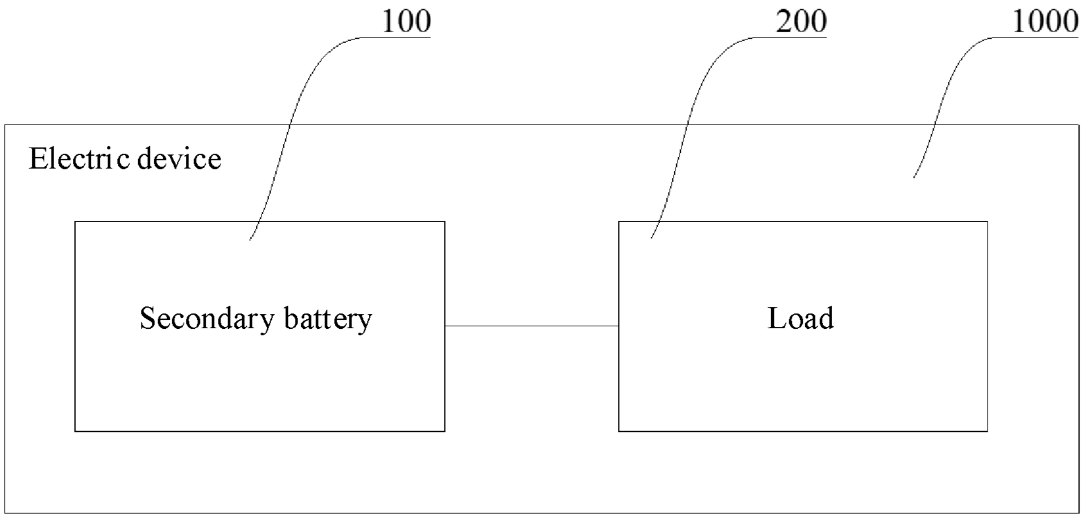


FIG. 1

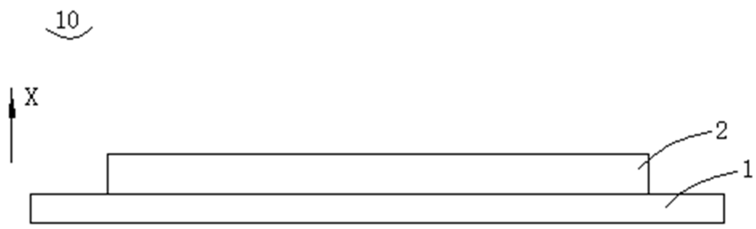


FIG. 2

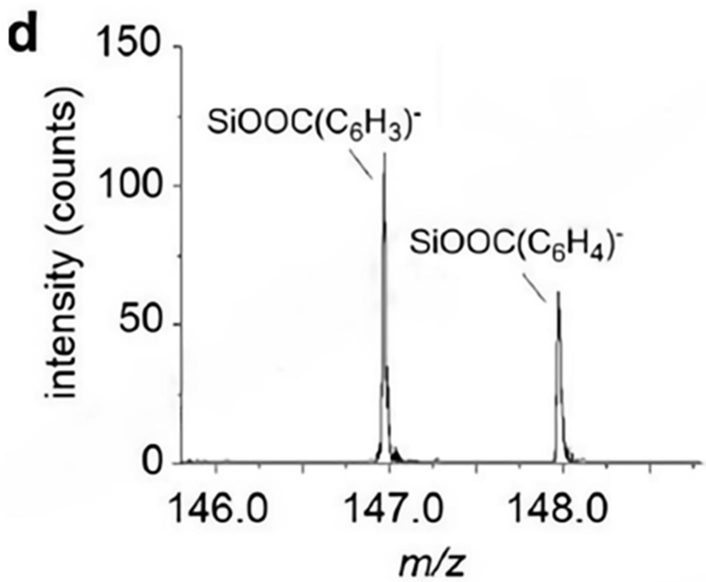


FIG. 3

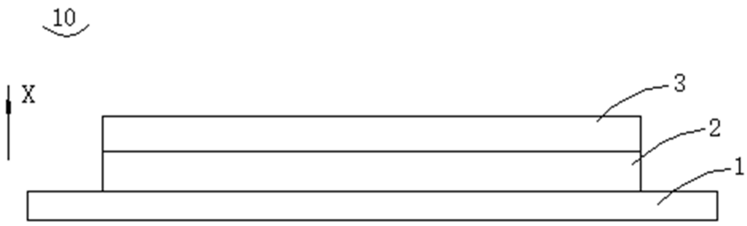


FIG. 4

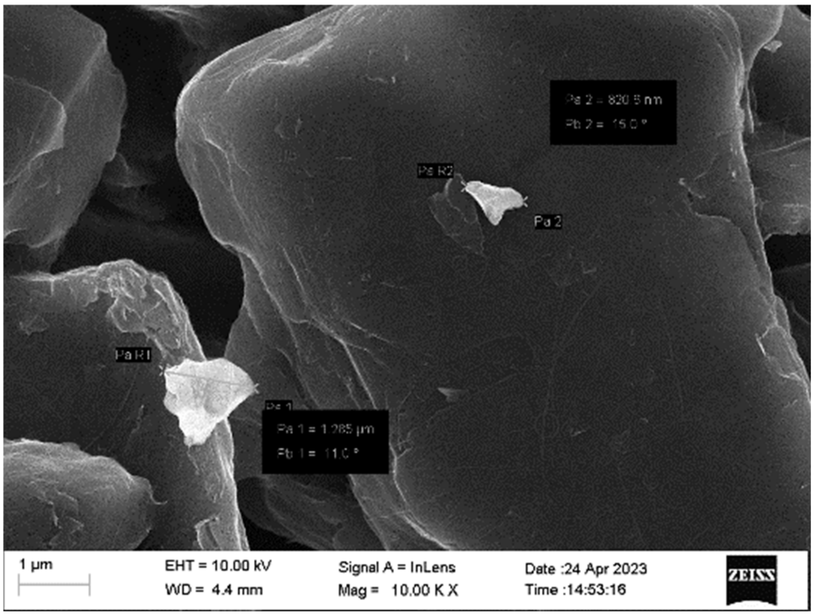


FIG. 5

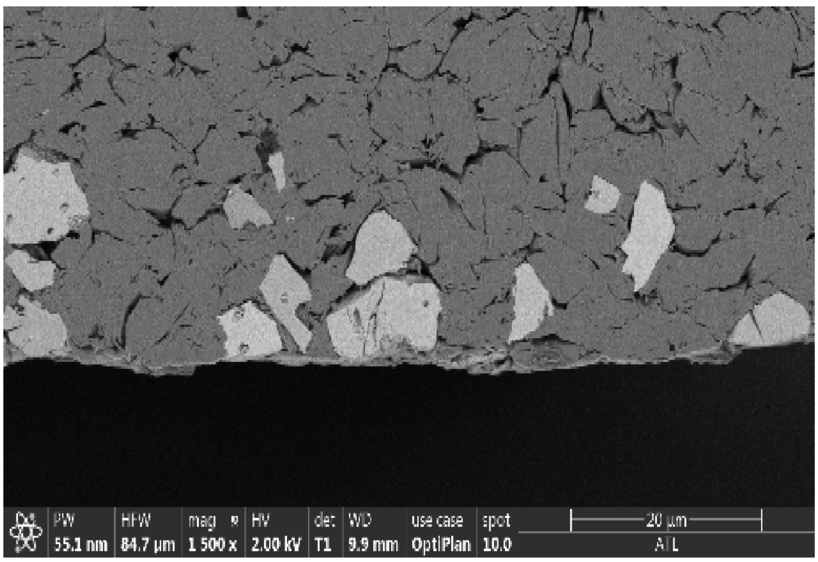


FIG. 6

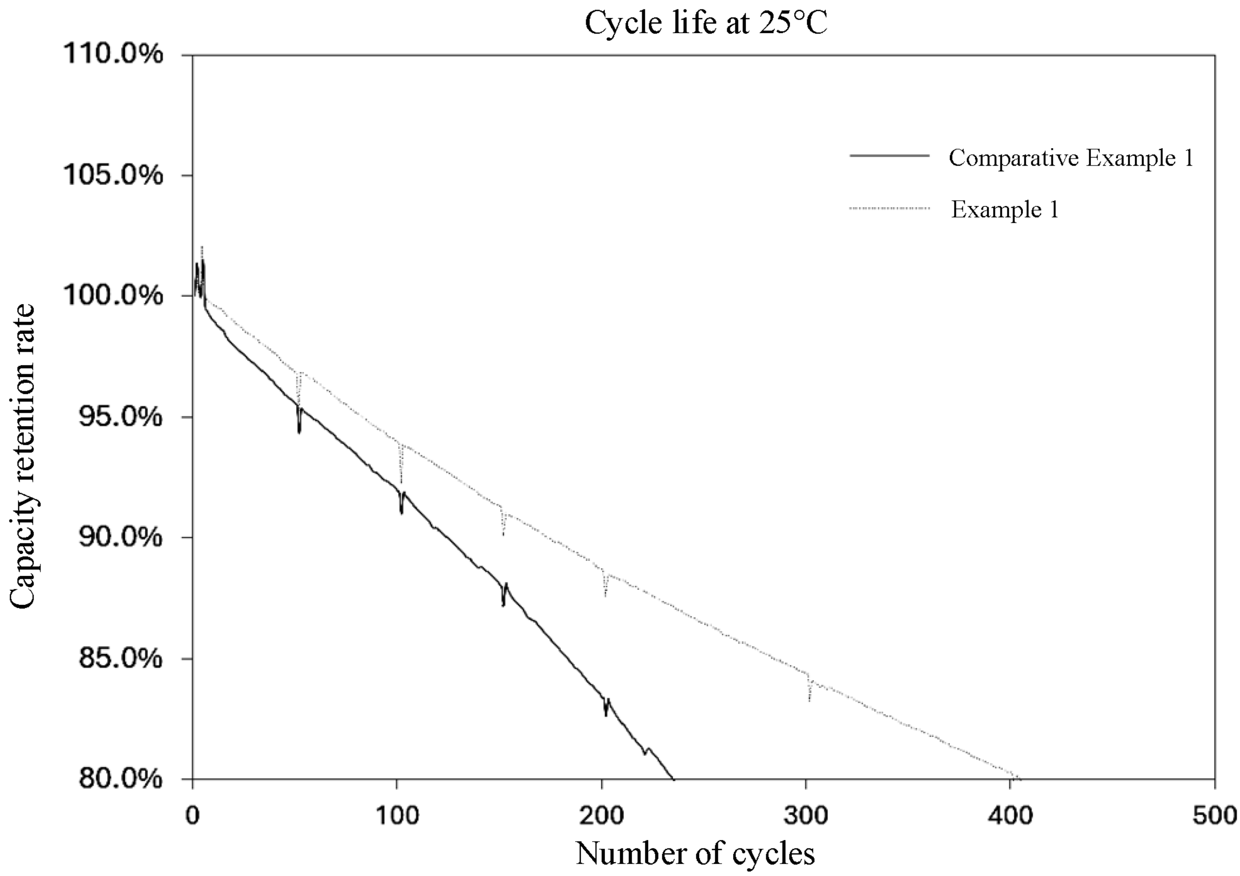
Cycle life at 25°C
110.0%
105.0%
100.0%
95.0%
90.0%
85.0%
80.0%
Capacity retention rate
0
100
200
300
400
500
Number of cycles
Comparative Example 1
Example 1

FIG. 7

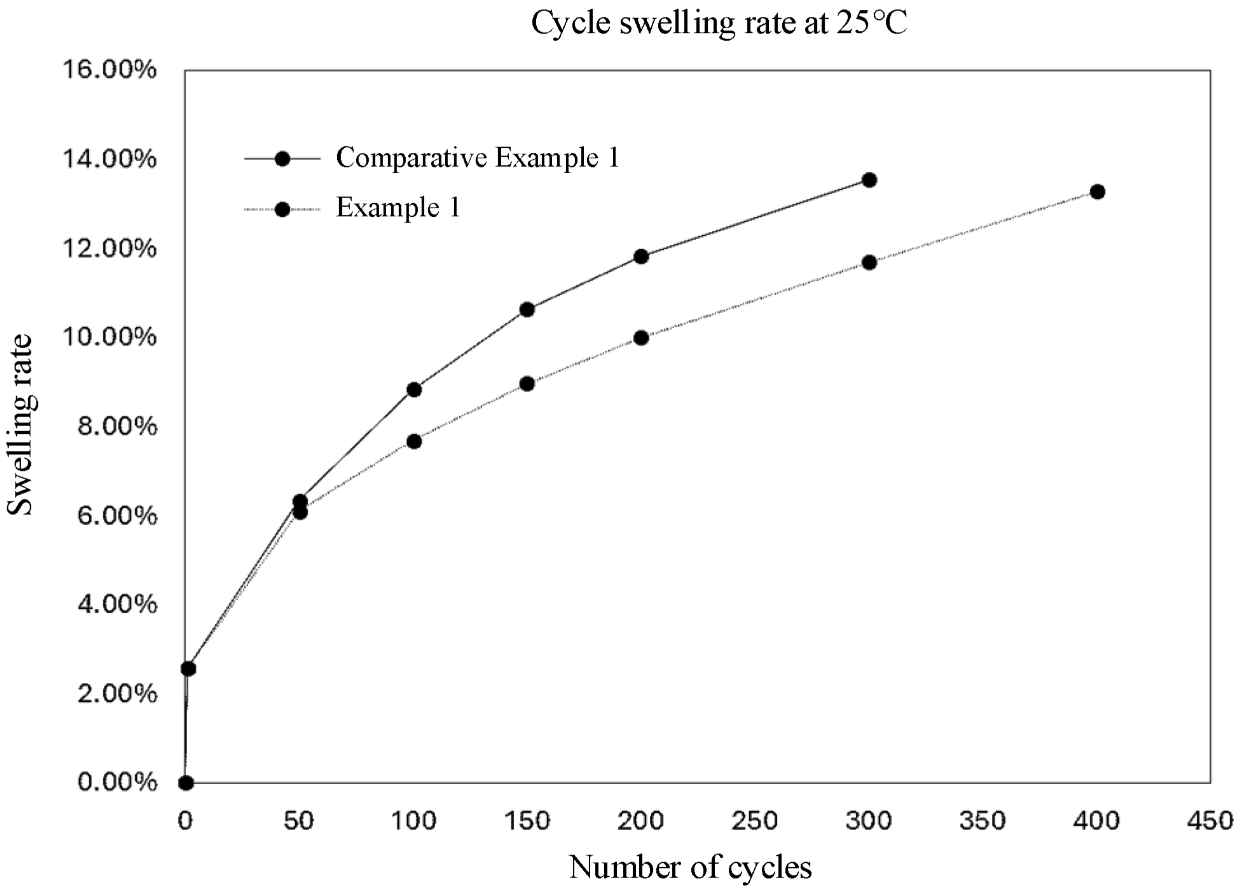
Cycle swelling rate at 25°C
16.00%
14.00%
12.00%
10.00%
8.00%
6.00%
4.00%
2.00%
0.00%
Swelling rate
Comparative Example 1
Example 1
0
50
100
150
200
250
300
350
400
450
Number of cycles

FIG. 8

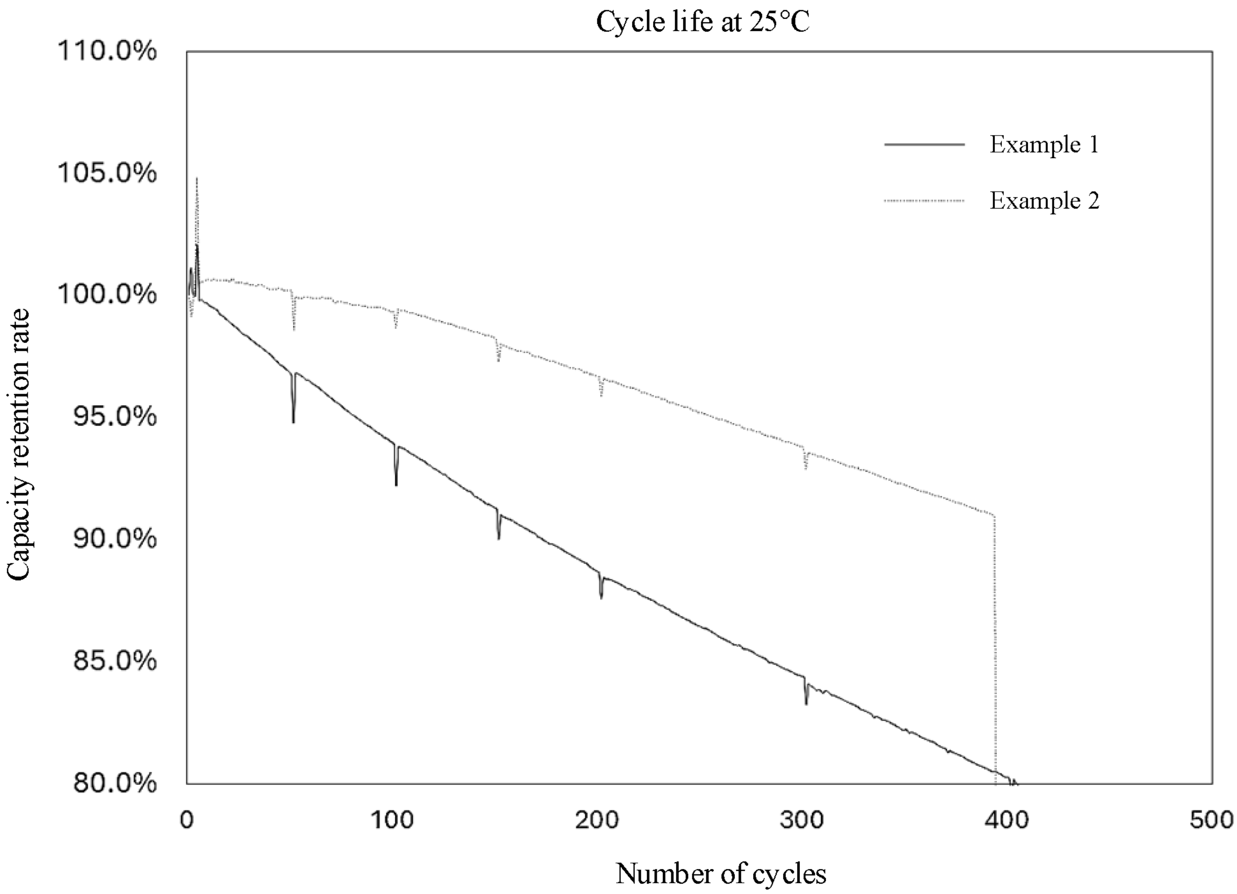
Cycle life at 25°C
110.0%
105.0%
100.0%
95.0%
90.0%
85.0%
80.0%
Capacity retention rate
0
100
200
300
400
500
Number of cycles
Example 1
Example 2

FIG. 9

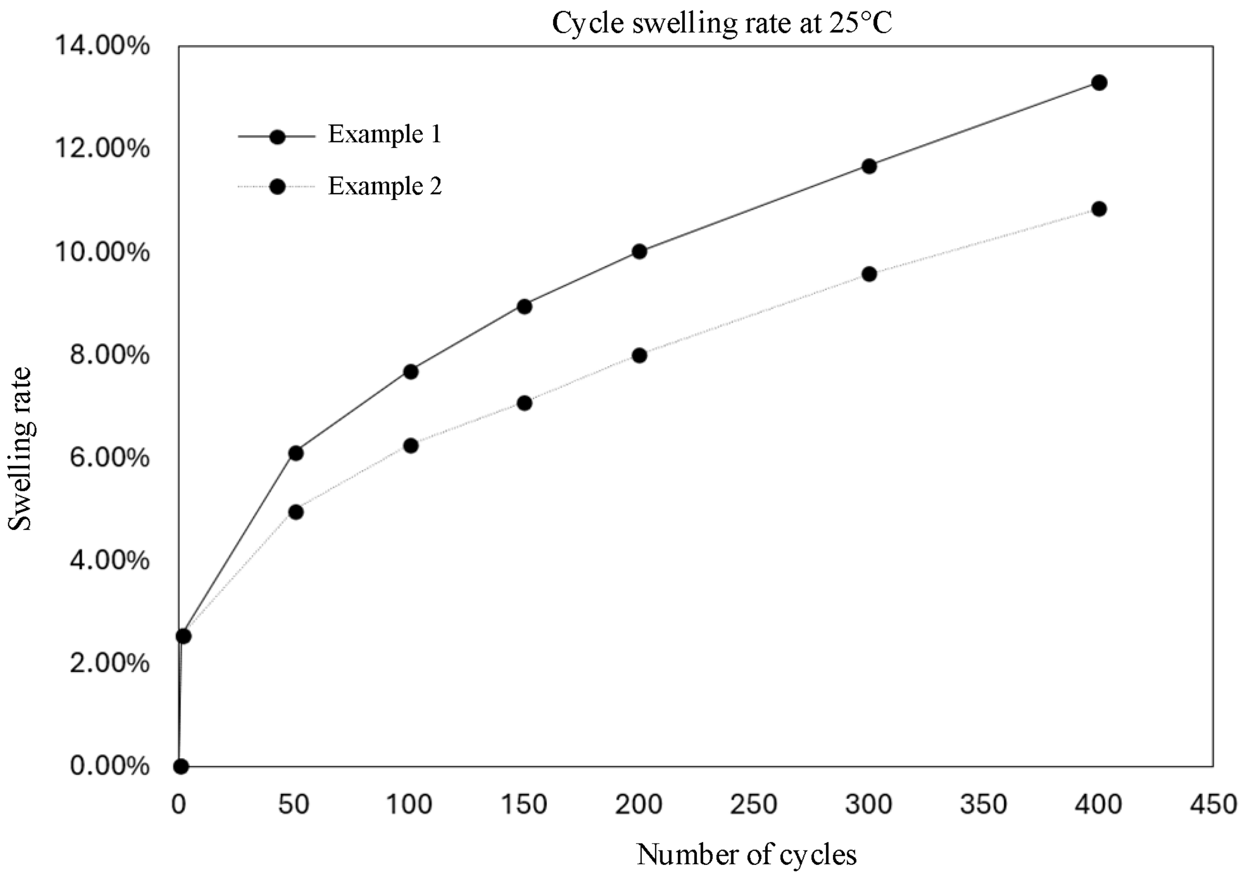
Cycle swelling rate at 25°C
14.00%
12.00%
10.00%
8.00%
6.00%
4.00%
2.00%
0.00%
Swelling rate
Example 1
Example 2
0
50
100
150
200
250
300
350
400
450
Number of cycles

FIG. 10

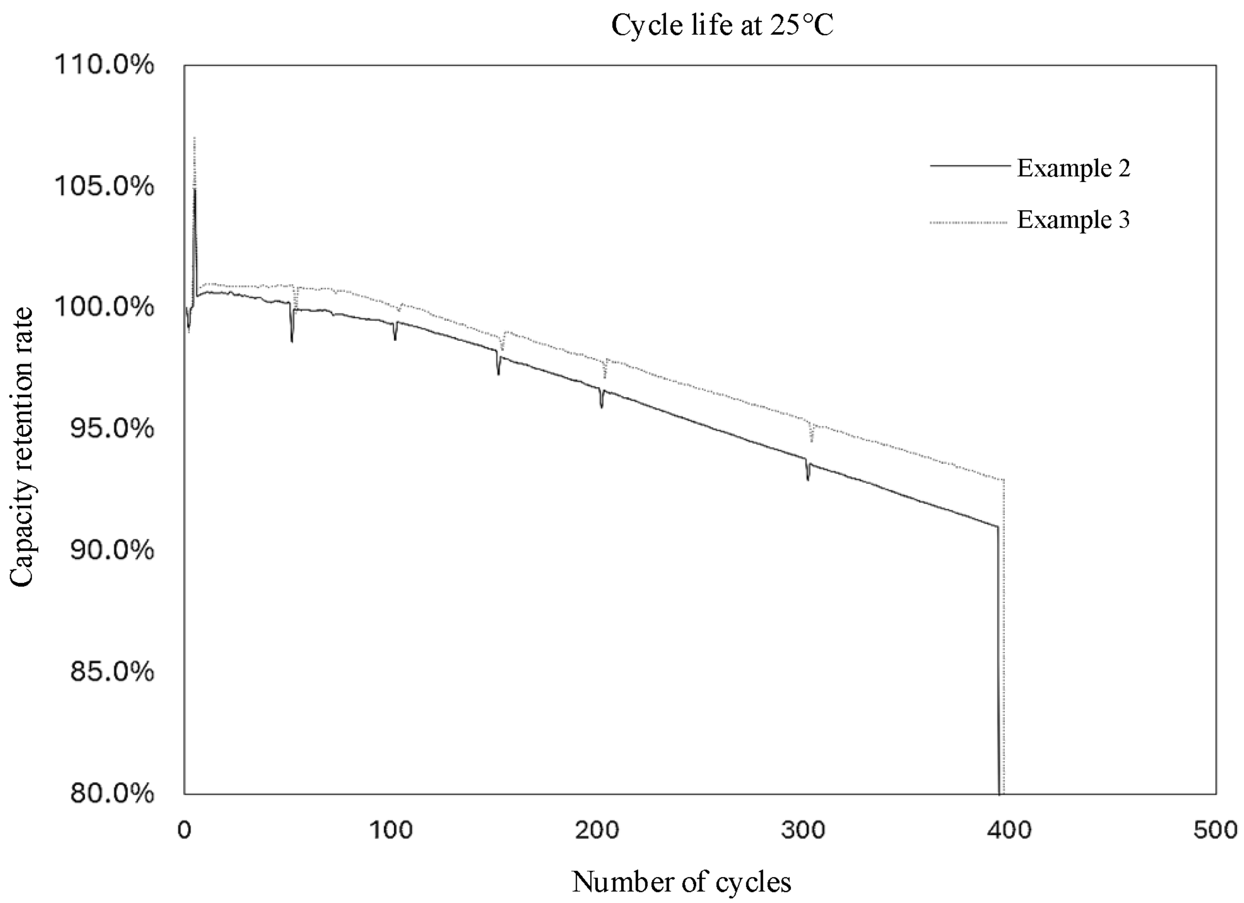
Cycle life at 25°C
110.0%
105.0%
100.0%
95.0%
90.0%
85.0%
80.0%
Capacity retention rate
Example 2
Example 3
0
100
200
300
400
500
Number of cycles

FIG. 11

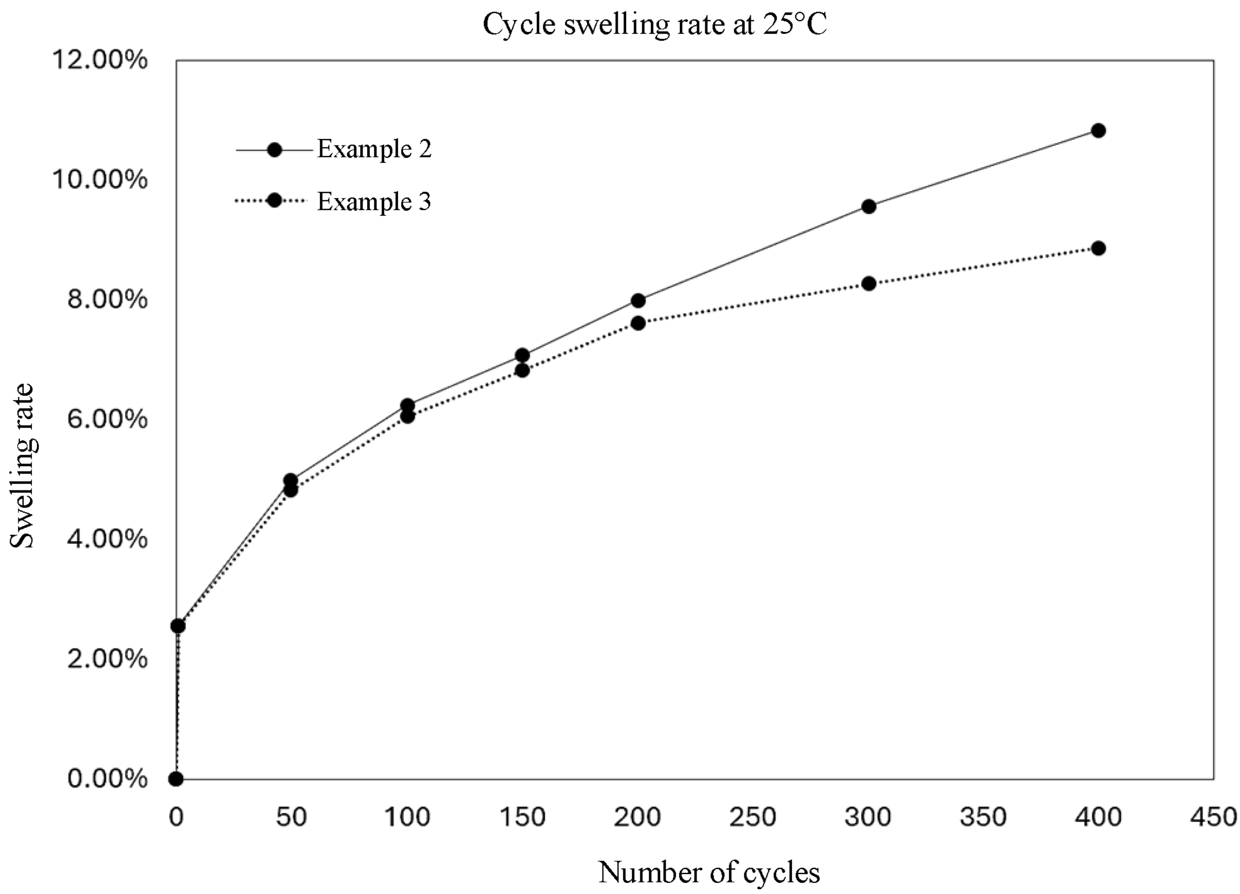
Cycle swelling rate at 25°C
12.00%
10.00%
8.00%
6.00%
4.00%
2.00%
0.00%
Swelling rate
Example 2
Example 3
0
50
100
150
200
250
300
350
400
450
Number of cycles

FIG. 12

**INTERNATIONAL SEARCH REPORT**

International application No.
**PCT/CN2025/071026**

**A. CLASSIFICATION OF SUBJECT MATTER**

H01M4/13(2010.01)i; H01M4/62(2006.01)i; H01M10/0525(2010.01)i; H01M10/058(2010.01)i

According to International Patent Classification (IPC) or to both national classification and IPC

**B. FIELDS SEARCHED**

Minimum documentation searched (classification system followed by classification symbols)

IPC:H01M4/-,H01M10/-

Documentation searched other than minimum documentation to the extent that such documents are included in the fields searched

Electronic data base consulted during the international search (name of data base and, where practicable, search terms used)

DWPI, CNTXT, JPTXT, WOTXT, EPTXT, 中国期刊网全文数据库, CJFD, ISI web of science: 电池, 电芯, 负极 , 活性材料, 石墨, 无机, 硅, si, D50, DV50, 固态电解质, 聚甲基丙烯酸甲酯 , 聚丙烯腈, battery, cell, active material, graphite, inorganic, silicon, solid state electrolyte, polymethylmethacrylate, polyacrylonitrile

**C. DOCUMENTS CONSIDERED TO BE RELEVANT**

| Category* | Citation of document, with indication, where appropriate, of the relevant passages | Relevant to claim No. |
|---|---|---|
| Y | CN 117352654 A (NINGDE AMPEREX TECHNOLOGY LTD.) 05 January 2024 (2024-01-05)<br>description, paragraphs 30 and 37 | 1-23 |
| Y | JP 2020149911 A (SEKISUI CHEMICAL CO., LTD.) 17 September 2020 (2020-09-17)<br>description, paragraphs 5, 9, 34, and 35 | 1-23 |
| Y | CN 117393696 A (NINGDE AMPEREX TECHNOLOGY LTD.) 12 January 2024 (2024-01-12)<br>description, paragraphs 5, 7, and 9 | 16-23 |
| PX | CN 118198257 A (NINGDE AMPEREX TECHNOLOGY LTD.) 14 June 2024 (2024-06-14)<br>description, paragraphs 6-35 | 1-24 |
| Y | CN 116941091 A (CONTEMPORARY AMPEREX TECHNOLOGY CO., LTD.) 24 October 2023 (2023-10-24)<br>description, paragraphs 63, 64, and 74 | 1-23 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 March 2025** | **14 April 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2025/071026**

**C. DOCUMENTS CONSIDERED TO BE RELEVANT**

| Category* | Citation of document, with indication, where appropriate, of the relevant passages | Relevant to claim No. |
|---|---|---|
| X | CN 114639868 A (BEIJING WELION NEW ENERGY TECHNOLOGY CO., LTD. et al.) 17 June 2022 (2022-06-17)<br>description, paragraphs 15 and 52 | 1, 23 |
| X | CN 117276465 A (DONGGUAN AMPEREX TECHNOLOGY LTD.) 22 December 2023 (2023-12-22)<br>description, paragraphs 6-17 | 1, 23 |
| X | CN 117542963 A (GTC-POWER (ZHUHAI) TECHNOLOGY CO., LTD.) 09 February 2024 (2024-02-09)<br>description, paragraphs 5-10 | 1, 23 |
| A | CN 114207873 A (NINGDE AMPEREX TECHNOLOGY LTD.) 18 March 2022 (2022-03-18)<br>description, paragraphs 1-8 | 1-24 |

Form PCT/ISA/210 (second sheet) (July 2022)

**INTERNATIONAL SEARCH REPORT**
**Information on patent family members**

International application No.
**PCT/CN2025/071026**

| Patent document cited in search report | | | Publication date (day/month/year) | Patent family member(s) | | | Publication date (day/month/year) |
|---|---|---|---|---|---|---|---|
| CN | 117352654 | A | 05 January 2024 | None | | | |
| JP | 2020149911 | A | 17 September 2020 | WO | 2020184713 | A1 | 17 September 2020 |
| CN | 117393696 | A | 12 January 2024 | None | | | |
| CN | 118198257 | A | 14 June 2024 | None | | | |
| CN | 116941091 | A | 24 October 2023 | WO | 2023087218 | A1 | 25 May 2023 |
| | | | | EP | 4235902 | A1 | 30 August 2023 |
| | | | | US | 2023343958 | A1 | 26 October 2023 |
| CN | 114639868 | A | 17 June 2022 | WO | 2023174299 | A1 | 21 September 2023 |
| | | | | CN | 114639868 | B | 11 June 2024 |
| CN | 117276465 | A | 22 December 2023 | None | | | |
| CN | 117542963 | A | 09 February 2024 | None | | | |
| CN | 114207873 | A | 18 March 2022 | WO | 2022205032 | A1 | 06 October 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202410383570


### Non-patent literature cited in the description


- Particle Size Distribution Laser Diffraction Method. *GB/T 19077-2016*